# EUROPEAN PATENT SPECIFICATION

(11) **EP 1 706 871 B1**
(45) Date of publication and mention of the grant of the patent: **08.10.2008**
(21) Application number: 04807805.9
(22) Date of filing: 17.12.2004
(51) Int. Cl.: G11B 19/02, H04N 5/76, G11B 27/10, G11B 20/12

(54) **RECORDING APPARATUS, INTEGRATED CIRCUIT FOR RECORDING APPARATUS, RECORDING METHOD, COMPUTER PROGRAM, AND RECORDING MEDIUM WHICH FACILITATES CONTENT RECORDING**
AUFZEICHNUNGSVORRICHTUNG, INTEGRIERTE SCHALTUNG FÜR EINE AUFZEICHNUNGSVORRICHTUNG, AUFZEICHNUNGSVERFAHREN, COMPUTERPROGRAMM UND COMPUTERAUFZEICHNUNGSMEDIUM ZUR ERMÖGLICHUNG DER INHALTSAUFZEICHNUNG
APPAREIL D'ENREGISTREMENT, CIRCUIT INTEGRE POUR CET APPAREIL D'ENREGISTREMENT, PROCEDE D'ENREGISTREMENT, PROGRAMME INFORMATIQUE ET SUPPORT D'ENREGISTREMENT QUI FACILITE L'ENREGISTREMENT DE CONTENU

(30) Priority: 18.12.2003 JP 2003421282
(43) Date of publication of application: 04.10.2006
(73) Proprietor: Matsushita Electric Industrial Co., Ltd., Kadoma-shi, Osaka 571-8501 (JP)
(72) Inventor: MIYAGAWA, Koji, c/o Matsushita El. Ind. Co., Ltd., Chuo-ku, Osaka-shi, Osaka 540-6319 (JP); YAMAMOTO, Yoichi, c/o Matsushita El. Ind. Co., Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/019449
(87) International publication number: WO 2005/059910

(56) References cited:
- EP-A- 1 195 766
- WO-A-03/069616

## Description

### Technical Field

The present invention relates a recoding apparatus that includes a drive unit for portable recording media and a built-in storage unit.

### Background Art

Recording apparatuses use various types of recording media. In recent years, hybrid recorders that have functions of both a DVD recorder and an HD recorder have been introduced to the market.

With a hybrid recorder, it is possible to record contents onto the Hard Disk (HD) or a DVD. AnHD, which has a large capacity, is mainly used for storing a large number of contents simply and temporarily. A DVD, which is removable from the recorder, is often used for storing the user's favorite contents on a long-term basis.

Naturally, the decision as to onto which one of the HD and a DVD each content should be recorded should be based on the user's choice; however, since a DVD is removable, there is a possibility that no DVD is attached to the recorder when a recording is to start. In order to cope with this situation, many hybrid recorders have a function of "relief recording", which is to perform a recording onto the HD instead of onto a DVD, in a case where, when a recording supposed to be on DVD is to start, no DVD is attached. EP-A-1 195 766, wich equally discloses the preamble of claim 1, discloses such a recording apparatus.

It is getting more and more necessary to properly manage where each content is to be recorded, as contents provided via television broadcasts and the like have been diversified. Many users seem to own a plurality of DVDs (hereafter, simply referred to as "discs") and use different discs for different purposes. When such a user has set a preprogrammed recording to be performed onto a disc, the user attaches in advance a desired disc onto the hybrid recorder so as to manage where each content is to be recorded.

There are chances, however, that the user attaches a disc that is different from the desired disc by mistake, or that another user changes the discs after a preprogrammed recording has been set. In such cases, a content may be recorded onto a disc that was not intended to be used.

Consequently, in a case where no disc is attached or where a disc that is different from a desired disc is attached when a recording is to start, in order to manage and store the content into a desired disc, the user will have to manually instruct that the content which has been recorded onto the HD as a result of the relief recording or has been recorded onto the disc different from the desired disc should be dubbed. There is a problem that this situation forces the user to perform troublesome operations.

It should be noted that in the example above, in order to have the content stored into the desired disc, the content which has been recorded as a result of the relief recording is to be dubbed onto the desired disc; however, it is acceptable to store the content into the desired disc by what is called "moving" of the content, that is to say, to record a copy of the relief-recording content onto the desired disc first and to subsequently delete the relief-recording content. In the description below, dubbing and moving of a content in order to store the content onto a desired disc will be simply referred to as "dubbing" or "to dub the content".

As a technique related to the present invention, there is a technique for, with the use of a DVD recorder onto which a plurality of discs can be attached at the same time, managing a plurality of discs with different disc IDs so that each content can be recorded onto a desired disc. With this technique, each preprogrammed recording is set using one of disc IDs that have been assigned to discs. When a recording is to start, a disc that has a matching disc ID is selected so that the content is recorded onto the disc. Even with this technique, however, if the desired disc is not attached when a recording is to start, the user is not able to have the content recorded onto the desired disc, and like with conventional hybrid recorders, the user is forced to perform troublesome operations in order to manage and have a content recorded on a desired disc.

### Disclosure of the Invention

A first object of the present invention to provide a recording apparatus, an integrated circuit for a recording apparatus, a recording method, and a computer program that each facilitate recording of a content onto a desired portable recording medium. A second object is to provide a recording medium that facilitates recording of a content.

In order to achieve these objects, the present invention provides a recording apparatus for recording contents, said recording apparatus comprising: a drive unit operable to have a portable recording medium removably attached; a relief recording medium; an obtaining unit operable to obtain specification information which specifies one or more portable recording media to be used for recording a content; a recording control unit operable to perform control so that (i) in a case where one of the specified portable recording media is attached to said drive unit when the content is to be recorded, the content is recorded onto the attached portable recording medium, and (ii) in a case where none of the specified portable recording media are attached to said drive unit when the content is to be recorded, the content is recorded onto said relief recording medium; and a dubbing control unit operable to, in a case where one of the specified portable recording media is attached to said drive unit after the content has been recorded onto the relief recording medium, dub the recorded content from said relief recording medium onto the one of the specified portable recording media.

Here, the relief recording medium is a storage device that is fixedly connected to the system, such as an HDD built into the recording apparatus or an HDD externally added to the recording apparatus. The portable recording medium is a removable recording medium such as a DVD-RAM.

With the aforementioned arrangement, if a recording medium besides the desired one specified by the user is attached to the drive unit or if no portable recording medium is attached to the drive unit when the content is to be recorded, the recording apparatus performs a relief recording so as to record the content onto a recording medium for the purposes of relief recordings (referred to as "a relief recording medium") . Subsequently, when the specified portable recording medium has been attached, the recoding apparatus dubs the content having been recorded on the relief recording medium onto the desired portable recording medium.

Accordingly, it is possible to have the content recorded onto the specified portable recording medium regardless of whether the specified portable recording medium is being attached to the drive unit when the content is to be recorded; therefore, even if the specified portable recording medium is not attached to the drive unit when the content is to be recorded, the user does not have to check to see onto which recording medium the content is recorded and is able to easily manage the recorded content.

Further, the recording apparatus may have an arrangement wherein the specification information specifies one portable recording medium, using a piece of identification information which uniquely identifies the one portable recording medium; and said recording control unit judges that the specified portable recording medium is attached to said drive unit when a currently attached portable recording medium is identified with the piece of identification information.

With this arrangement, by specifying a desired recording medium prior to the recording of the content, it is possible to have the content recorded onto the specified recording medium. Accordingly, even if a user owns a plurality of portable recording media, the user is able to easily identify the portable recording medium on which the content is recorded and manage the recorded content.

The recording apparatus may have an arrangement wherein the specified portable recording medium has the piece of identification information recorded thereon; and said recording control unit makes the judgment by comparing the piece of identification information recorded on a currently attached portable recording medium with the piece of identification information used by the specification information.

With this arrangement, it is possible to judge whether or not the specified recording medium is being attached to the drive unit.

The recording apparatus further may have an arrangement wherein the specification information specifies the one or more portable recording media, using a piece of identification information that identifies a group made up of the one or more portable recording media; and said recording control unit judges that one of the specified portable recording media is attached to said drive unit when a currently attached portable recording medium belongs to the group identified with the piece of identification information.

Here, it is acceptable to have an arrangement wherein the group made up of one or more portable recording media represents a genre of recorded contents, such as sports or drama. Alternatively, portable recording media may be organized into groups on the basis of who uses each recording medium, such as portable recording media for the personal use and for the family members' common use.

With the aforementioned arrangement, it is possible to have the content recorded onto one of the portable recording media belonging to the specified group.

Accordingly, even if a user owns a plurality of portable recording media, since the plurality of recording media are organized into groups representing different purposes so that one of the groups is specifiedwhen the content is to be recorded, the user is able to, depending on each of the different purposes, easily identify portable recording media on which the content is recorded and manage the recorded content.

The recording apparatus may have an arrangement wherein each of the one or more specified portable recording media has the piece of identification information recorded thereon, the piece of identification information showing the group to which each recording medium belongs; and said recording control unit makes the judgment by comparing the piece of identification information recorded on a currently attached portable recording medium with the piece of identification information used by the specification information.

Alternatively, the recording apparatus may further comprise a list storing unit that stores a list showing the one or more specified portable recording media belonging to the group; wherein said recording con trol unit makes the judgment by referring to the list.

With these arrangements, it is possible to judge whether or not one of the portable recording media belonging to the specified group is being attached to the drive unit.

The recording apparatus may have an arrangement wherein said obtaining unit is further operable to obtain time information which indicates a time at which the content is broadcaster as a broadcast program, and the recording control unit performs the control so that the content is recorded at the time indicated by the time information.

With this arrangement, even if the specified portable recording medium is not attached at the time indicated by the time information, the content is at first recorded onto the relief recording medium as a result of the relief recording and subsequently, when the specified portable recording medium has been attached, the content is dubbed onto the specified portable recording medium.

Accordingly, even if the user leaves home without attaching the specified portable recording medium, the user does not lose the opportunity of having the content recorded of which the broadcast time is predetermined. Further, when the user attaches the specified portable recording medium onto the recording apparatus after coming back home, the content is dubbed; therefore, the user is able to easily manage the recorded content.

The recording apparatus may have an arrangement wherein the obtaining unit obtains the specification information and the time information based on a piece of preprogramming information provided by a user who preprograms the recording of the content.

With this arrangement, when preprogramming a recording of a content, the user is able to specify one or more recording media to be eventually used for the recording of the content.

Accordingly, the user is able to exercise, all at once, an operation to set a preprogrammed recording and an operation to set the dubbing to be performed if the content is recorded by a relief recording; therefore, the user is able to easily have the content recorded onto the desired portable recording medium.

The recording apparatus may have an arrangement wherein the specification information specifies one portable recording medium; a piece of preset information is recorded on the specified portable recording medium, the piece of preset information instructing that the content should be recorded and including the time information; and when the piece of preset information is read from the portable recording medium, the obtaining unit obtains (i) the specification information for instructing that the content shouldbe recorded onto the portable recording medium having the piece of preset information, and (ii) the time information included in the piece of preset information.

With this arrangement, when a portable recording medium on which a piece of preset information is recorded in advance is attached to the drive unit, both the preprogramming of the recording of the content and the specification of where the content should be recorded are completed.

Accordingly, the user does not have to select a portable recording medium to be used for the recording of the content when setting a preprogrammed recording; therefore, the user is able to easily have the content recorded onto the dedicated portable recording medium.

The recording apparatus may further comprise an area releasing unit operable to, in a case where after the time indicated by the time information has arrived and the content is not recorded on either of said relief recording medium and the specified portable recording medium having the piece of preset information recorded thereon, release an area that is within the specified portable recording medium having the piece of preset information and is reserved for the recording of the content.

With this arrangement, if the broadcast of the content has already been started when the portable recording medium having the preset information recorded thereon is attached to the drive unit, or if the relief recording of the content has failed because the relief recording medium does not have enough capacity, it is possible to release the area reserved for the recording of the content so that the portable recording medium can be utilized for other purposes.

Accordingly, it is possible to efficiently utilize recoding areas of the portable recording medium.

The recording apparatus may further comprise an area releasing unit operable to, in a case where the piece of preset information is deleted from the specified portable recording medium, release an area that is within the specified portable recording medium having the piece of preset information and is reserved for the recording of the content.

With this arrangement, when the user does not wish to have the content recorded, by deleting the preset information from the portable recording medium, the user is able to release the area reserved for the recording of the content and to utilize the recording medium for other purposes.

Accordingly, it is possible to efficiently utilize recording areas of portable recording media.

The recording apparatus may have an arrangement wherein the content is a piece of image data included in communication data which the recording apparatus receives from an external device operable to communicate with said recording apparatus; the obtaining unit obtains the specification information from the communication data; and said recording control unit performs the control of recording the content when said recording apparatus has received the communication data from the external device.

Here, an external device operable to communicate with the recording apparatus is, for instance, a portable terminal device that has a communication function such as a portable phone with a camera. The recording apparatus serves to back up image data that has been photographed by an external device which has a small storage capacity.

With the aforementioned arrangement, even if a specified portable recording medium is not attached when a piece of communication data has been received, the image data is at first recorded onto the relief recording medium by a relief recording, and subsequently when the specified portable recording medium is attached, the image data is dubbed onto the specifiedportable recording medium.

Accordingly, while operating the external device, the user is able to specify an arbitrary portable recording medium as the recording medium to be used for the recording, without being concerned about which portable recording medium is currently attached to the drive unit.

The recording apparatus may further comprise a list storing unit that stores a List showing options of portable recording media among which the one or more portable recording media specified in the specification information can be selected from; and a notifying unit operable to notify the external device of the options of the portable recording media shown in the list.

With this arrangement, while the user is operating the external device, it is possible to notify the user of options of portable recording media among which the user is able to select from and specify.

Accordingly, even if the user is outside his/her home when operating the external device, the user is able to understand the options of portable recording media among which he/she is able to select from and specify and to have the photographed image data recorded onto a desired portable recording medium.

The recording apparatus may further comprise a presenting unit operable to present a warning to a user when the content has been recorded onto said relief recording medium.

With this arrangement, since the warning is presented before the specified portable recording medium is attached to the drive unit, the user is able to recognize that the content is recorded on the relief recording medium by a relief recording and that the content has not yet been recorded on the specified portable recording medium.

Accordingly, it is possible to prevent the content having been recorded on the relief recording medium as a result of the relief recording from being deleted by mistake before the content is dubbed onto the specified portable recording medium.

The recording apparatus may have an arrangement wherein the warning presented by said presenting unit suggests that one of the specified portable recording media should be attached to said drive unit.

Further, the recording apparatus may further comprise a list storing unit that stores a list showing one or more portable recording media, wherein in a case where at least one of the specified portable recording media is shown in the list, said presenting unit presents a warning which suggests that the at least one of the specified portable recording media should be attached to said drive unit; and in a case where none of the specified portable recording media are shown in the list, said presenting unit presents a warning which suggests that any portable recording medium except for the one or more portable recording media shown in the list should be attached to said drive unit.

With these arrangements, the user is able to recognize which portable recording medium should be attached to the drive unit; therefore, possibility of the user attaching the specified portable recording medium before long becomes higher.

Accordingly, the aforementioned arrangement achieves an effect of having the dubbing onto the specified portable recording medium completed soon; therefore, it is possible to avoid the situation where the length of time for keeping the content having been recorded on the relief recording medium as a result of a relief recording becomes long. Thus, it is possible to efficiently utilize recording areas of the relief recording medium.

The present invention further provides an integrated circuit for a recording apparatus which includes a drive unit operable to have a portable recording medium removably attached and a relief recording medium, said integrated circuit comprising: an obtaining unit operable to obtain specification information which specifies one or more portable recording media to be used for recording a content; a recording control unit operable to perform control so that (i) in a case where one of the specified portable recording media is attached to the drive unit when the content is to be recorded, the content is recorded onto the attached portable recording medium, and (ii) in a case where none of the specified portable recording media are attached to the drive unit when the content is to be recorded, the content is recorded onto the relief recording medium; and a dubbing control unit operable to, in a case where one of the specified portable recording media is attached to the drive unit after the content has been recorded onto the relief recording medium, dub the recorded content from the relief recordingmediumonto the one of the specifiedportable recording media.

With this arrangement, if a recording medium besides the desired one specified by the user is attached to the drive unit or if no portable recording medium is attached to the drive unit when the content is to be recorded, the recording apparatus performs a relief recording so as to record the content onto the relief recording medium. Subsequently, when the specified portable recording medium has been attached, the recoding apparatus dubs the content having been recorded on the relief recording medium onto the desired portable recording medium.

Accordingly, it is possible to have the content recorded onto the specified portable recording medium regardless of whether the specified portable recording medium is being attached to the drive unit when the content is to be recorded; therefore, even if the specified portable recording medium is not attached to the drive unit when the content is to be recorded, the user does not have to check to see onto which recording medium the content is recorded and is able to easily manage the recorded content.

In order to achieve the object, the present invention provides a computer program to be executed by a computer which includes a drive unit operable to have a portable recording medium removably attached and a relief recording medium, said computer program comprising: program code operable to cause the computer to obtain specifications information which specifies one or more portable recording media to be used for recording a content; program code operable to cause the computer to, (i) in a case where one of the specified portable recording media is attached to the drive unit when the content is to be recorded, record the content onto the attached portable recording medium, and (ii) in a case where none of the specified portable recording media are attached to the drive unit when the content is to be recorded, record the content onto the relief recordingmedium; and program code operable to cause the computer to, in a case where one of the specified portable recording media is attached to the drive unit after the content has been recorded onto the relief recording medium, dub the recorded content from the relief recording medium onto the one of the specified portable recording media.

With this arrangement, if a recording medium besides the desired one specified by the user is attached to the drive unit or if no portable recording medium is attached to the drive unit when the content is to be recorded, the computer program performs a relief recording so as to record the content onto the relief recording medium. Subsequently, when the specified portable recording medium has been attached, the computer program dubs the content having been recorded on the relief recording medium onto the desired portable recording medium.

Accordingly, it is possible to have the content recorded onto the specified portable recording medium regardless of whether the specified portable recording medium is being attached to the drive unit when the content is to be recorded; therefore, even if the specified portable recording medium is not attached to the drive unit when the content is to be recorded, the user does not have to check to see onto which recording medium the content is recorded and is able to easily manage the recorded content.

In order to achieve the object, the present invention also provides a content recording method used by a recording apparatus that includes a drive unit operable to have a portable recording medium removably attached and a relief recording medium, said content recording method comprising: obtaining specification information which specifies one or more portable recording media to be used for recording a content; (i) in a case where one of the specified portable recording media is attached to the drive unit when the content is to be recorded, recording the content onto the attached portable recording medium, and (ii) in a case where none of the specified portable recording media are attached to the drive unit when the content is to be recorded, recording the content onto the relief recording medium; and in a case where one of the specified portable recording media is attached to the drive unit after the content has been recorded onto the relief recording medium, dubbing the recorded content from the relief recording medium onto the one of the specified portable recording media.

With this arrangement, if a recording medium besides the desired one specified by the user is attached to the drive unit or if no portable recording medium is attached to the drive unit when the content is to be recorded, the recording apparatus performs a relief recording so as to record the content onto the relief recording medium. Subsequently, when the specified portable recording medium has been attached, the recoding apparatus dubs the content having been recorded on the relief recording medium onto the desired portable recording medium.

Accordingly, it is possible to have the content recorded onto the specified portable recording medium regardless of whether the specified portable recording medium is being attached to the drive unit when the content is to be recorded; therefore, even if the specified portable recording medium is not attached to the drive unit when the content is to be recorded, the user does not have to check to see onto which recording medium the content is recorded and is able to easily manage the recorded content.

In order to achieve the object, the present invention also provides a recording medium comprising: a piece of preset information for instructing a recording apparatus to record a content; wherein said piece of preset information includes: program information for identifying a broadcast program for broadcasting the content; specification information for instructing that the content should be recorded onto said recording medium; and area information for specifying a preprogramming area within said recording medium into which only the content is allowed to be recorded.

Here, in order to specify a broadcast program, it is acceptable to use a broadcast channel, the broadcast starting time and the broadcast ending time. It is also acceptable to use a piece of information for uniquely identifying one of the broadcast programs shown in an electric program guide (hereafter, simply referred to as an EPG) or to use G-codes (registered trademark), or the like.

When the above-described recording medium on which a piece of preset information has been recorded in advance is attached to the recording apparatus, a recording of the content is preprogrammed and also where the content is to be recorded is specified.

Accordingly, the user is able to easily have the content recorded onto the recording medium without having to preprogram the recording. Further, since the recording medium on which preset information has been recorded in advance is specified to be used for the recording of the content, the user does not have to specify where the content should be recorded and is able to easily manage the content.

### Brief Description Of The Drawings

FIG. 1 shows a utilization example of a hybrid recorder according to the first embodiment;
FIG. 2 shows a hardware configuration of the hybrid recorder according to the first embodiment;
FIG. 3 shows a functional configuration of a computer program that controls the hybrid recorder according to the first embodiment;
FIG. 4 shows an example of preprogramming information;
FIG. 5 shows an example of a media management list;
FIG. 6 shows the data structure of dubbing information;
FIG. 7 is a flow chart that shows the processing procedure for a computer program that controls the hybrid recorder 100;
FIG. 8 is a flow chart that shows the processing procedure of the preprogrammed recording processing;
FIG. 9 is a flow chart that shows the processing procedure of the dubbing processing;
FIG. 10 is a flow chart that shows the processing procedure of a processing for warning the user that a content is recorded by a relief recording;
FIG. 11A is an example of a warning displayed to suggest that a registered disc should be inserted;
FIG. 11B is an example of a warning displayed to suggest that an unregistered disc should be inserted;
FIG. 12 is a flowchart that shows the processing procedure of the new-disc registration processing;
FIG. 13A is an example of a display for requesting that a media management number should be inputted in order to have a new disc registered;
FIG. 13B is an example of a display for requesting that a media management number should be re-inputted;
FIG. 14 shows the data structure of a recording medium according to a modification example in which a recording medium being provided has preset information recorded thereon, the preset information being for specifying a content to be recorded;
FIG. 15 is a flowchart that shows the processing procedure after a recordingmedium is inserted, according to a modification example of the first embodiment;
FIG. 16 is a flowchart that shows the processing procedure for deleting preset information from the recording medium, according to the modification example of the first embodiment;
FIG. 17 schematically shows the transition of recording areas in a case where preset information is deleted from the recording medium;
FIG. 18 shows a utilization example of the hybrid recorder according to the second embodiment;
FIG. 19 is an example of communication data according to the second embodiment;
FIG. 20 shows a functional configuration of a computer program that controls the hybrid recorder according to the second embodiment;
FIG. 21 is a flow chart that shows theprocessingprocedure of a processing for providing a media management list for an external device;
FIG. 22 is a flow chart that shows the processing procedure of the image recording processing; and
FIG. 23 shows a modification example in which a recording apparatus according to the present invention is constituted by an HDD recorder and a DVD recorder.

### Best Mode for Carrying Out the Invention

The following describes embodiments of the present invention, with reference to the figures.

### FIRST EMBODIMENT

A recording apparatus according to the first embodiment is a hybrid recorder that comprises a built-in HD to be used as a recording medium for the purposes of relief recordings and that uses a DVD-RAM as a portable recording medium.

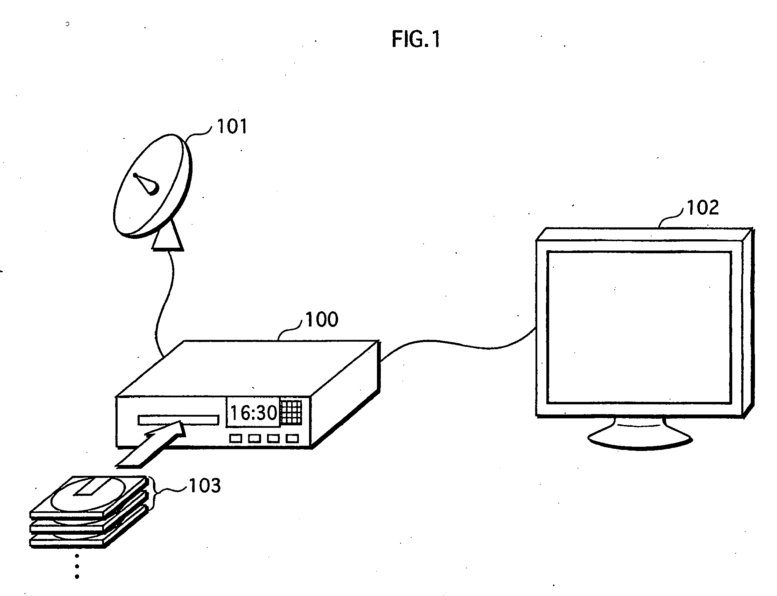

FIG. 1 a utilization example of a hybrid recorder according to the first embodiment.

The hybrid recorder 100 is operable to convert a content that has been received via the antenna 101 and is in an analog broadcast signal format so that the content is in the MPEG 2 format, and to record the content onto the HD or a DVD-RAM inserted in the slot. The hybrid recorder 100 is also operable to dub a content having been recorded on the HD onto a DVD-RAM.

The monitor 1 02 is operable to display moving picture data outputted by the hybrid recorder 100.

The DVD-RAMs 103 are a plurality of portable recording media owned by the user. Each of the discs has a media management number recorded in a recording area, each media management number being used for uniquely identifying a different one of the discs. One of these discs can be selectively attached to the slot of the hybrid recorder 100.

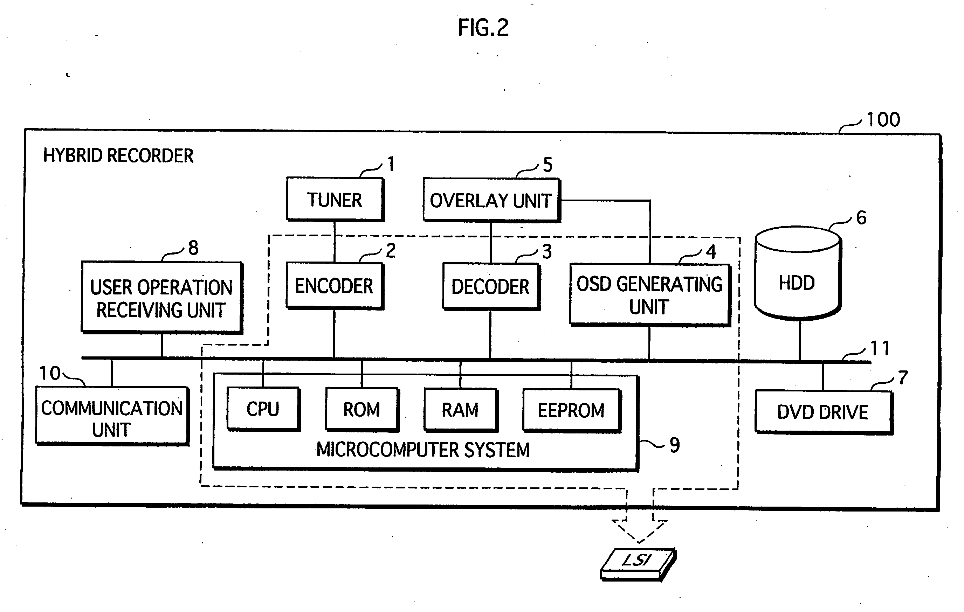

The following describes the hardware configuration of the hybrid recorder 100. As shown in FIG. 2, the hybrid recording 100 comprises: a tuner 1, an encoder 2, a decoder 3, an OSD (On-Screen Display) generating unit 4, an overlay unit 5, an HDD 6, a DVD drive 7, a user operation receiving unit 8, a microcomputer system 9, a communication unit 10, and a bus 11. The encoder 2, the decoder 3, the OSD generating unit 4, the HDD 6, the DVD drive 7, the microcomputer system 9, and the communication unit 10 are connected to one another via the bus 11.

The tuner 1 performs decoding and makes a channel selection for broadcast waves received via the antenna 101, so as to obtain a content in an analog broadcast signal format.

The encoder 2 performs A/D conversion on the content in the analog broadcast signal format and further performs compression encoding according to the MPEG 2 format, so as to generate a content in the MPEG 2 format.

The decoder 3 decompresses the content in the MPEG 2 format and further performs D/A conversion so as to convert the content into an analog vide signal format.

The OSD generating unit 4 generates a piece of image data for OSD which is used to display the setting of the hybrid recorder 100 and/or information about a content.

The overlay unit 5 overlays the piece of OSD image data onto the content in the analog video signal format so that they are outputted to the monitor 102.

The HDD 6 writes and reads a content in the MPEG 2 format to and from a built-in HD which has a large capacity. Here, when a content is written onto the HD, content information is written onto the HD, as well. The content information is made up of, for example, an identifier for uniquely identifying the content (hereafter, the identifier will be referred to as a content ID), the address of an area into which the content is to be recorded, a data amount, a content title, and the like.

The DVD drive 7 writes and reads data to and from a disc having been attached.

The user operation receiving unit 8 receives a user operation inputted via an operation panel provided on the front of the hybrid recorder 100.

The microcomputer system 9 is a computer system that is made up of a CPU, a ROM, a RAM, and an EEPROM. The functions of the hybrid recorder 100 are achieved when a computer program stored in the ROM is read by the CPU, and thereby the computer program and hardware resources collaborate.

The communication unit 10 realizes communication of the hybrid recorder 100 with an external device via a network such as the Internet. This completes the description of the hardware configuration of the hybrid recorder 100.

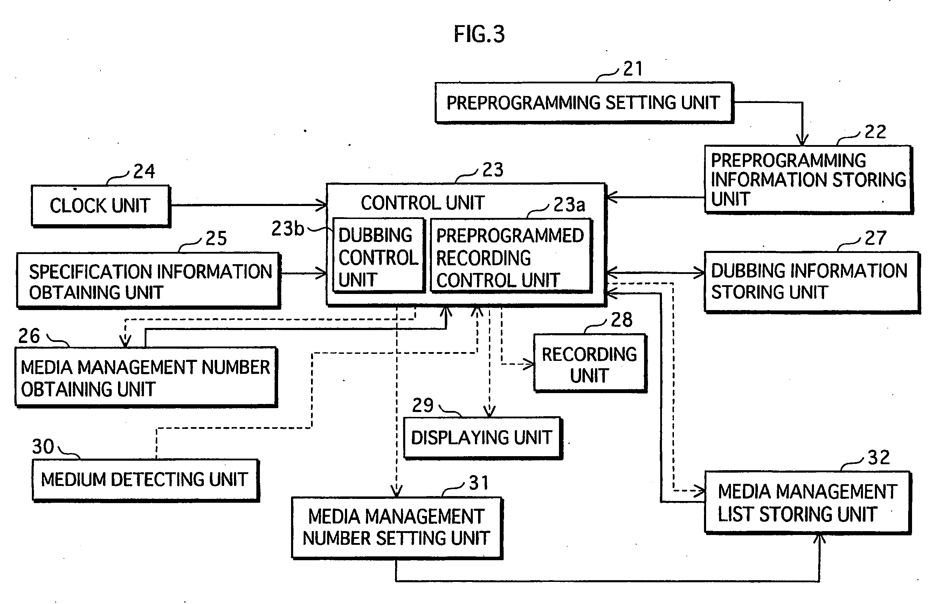

The following describes the functions of the microcomputer system 9 which are realized by collaboration of the computer program and the hardware resources. FIG. 3 is a block diagram that shows the functional configuration of the microcomputer system 9. As shown in the drawing, the microcomputer system 9 includes functional blocks such as a preprogramming setting unit 21, a preprogramming information storing unit 22, a control unit 23, a clock unit 24, a specification information obtaining unit 25, a media management number obtaining unit 26, a dubbing information storing unit 27, a recording unit 28, a displaying unit 29, a medium detecting unit 30, a media management number setting unit 31, and a media management list storing unit 32.

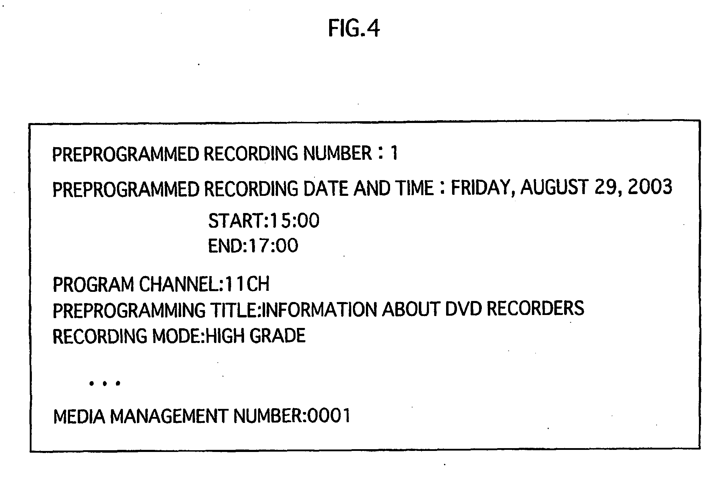

The preprogramming setting unit 21 controls the preprogramming setting process. Controlling the preprogramming settingprocess means to control the OSDprovided by the OSD generating unit 4 and the overlay unit 5 and to interactively receive user operations via the user operation receiving unit 8, so as to obtain a piece of information specifying the broadcast date, the broadcast starting time, the broadcast ending time, the channel, the title, and the recording image quality for the content to be recorded, as well as where the content should be recorded, and to further record the piece of information into the preprogramming information storing unit 22 as a piece of preprogramming information arranged in a format shown in FIG. 4.

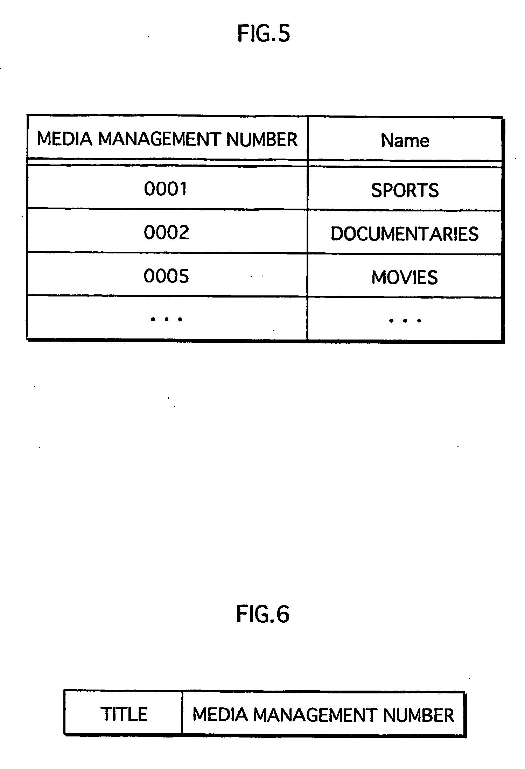

In a preprogramming setting processing performed by a conventional hybrid recorder, as a specification of where a content should be recorded, only the choice of either the HD or a DVD-RAM is received. In contrast, the preprogramming setting processing according to the present invention is characterized with that, in a case where a DVD-RAM is specified to be used for the recording, a specification is received regarding onto which one of the DVD-RAMs 103 owned by the user, the content is to be recorded. In such a case, in order to specify one of the discs, either a "media management number" or a "disc name" is used. Each "media management number" uniquely identifies one of the discs. Each "disc name" is registered in correspondence with a media management number in the media management list shown in FIG. 5. For example, in the preprogramming information shown in FIG. 4, the disc having the media management number "0001" is specified to be used for the recording. Hereafter, in this description, explanation on embodiments are provided while focusing on the characteristic of the present invention, which is the configurations with which preprogrammed recordings are controlled in cases where a DVD-RAM is specified to be used for the recordings.

The control unit 23 is a functional block for controlling recording of a content. The control unit 23 includes a preprogrammed recording control unit 23a and a dubbing control unit 23b.

The preprogrammed recording control unit 23a controls the preprogrammed recording processing, which is to record broadcast of a content based on preprogramming information. Controlling the preprogrammed recording processing means (i) to receive a notification of a current time from the clock unit 24, (ii) when the broadcast date and starting time specified in a piece of preprogrammed information has arrived, to have the tuner 1 tuned to the specified channel so that a content in an analog broadcast signal format is received, (iii) to have the encoder 2 encode the received content with an allocated bit rate specified as the recording image quality, (iv) to have either the HDD 6 or the DVD drive 7 write the encoded content, and (v) subsequently when the broadcast ending time has arrived, to have the tuner 1, the encoder 2, and either the HDD 6 or the DVD drive 7 end their respective processing.

Here, the characteristic of the preprogrammed recording processing performed by the preprogrammed recording control unit 23a lies in the control performed in a case where a piece of preprogramming information specifies that a DVD-RAM is to be used for the recording of the content. In the preprogrammed recording processing performed by a conventional hybrid recorder, if a disc is not attached into the slot when the broadcast starting time has arrived, the content is written by the HDD 6 by a relief recording. In the preprogrammed recording processing according to the present invention, in addition to a case where a disc is not attached into the slot when the broadcast starting time has arrived, also in a case where a disc different from the disc specified to be used for the recording in a piece of preprogramming information is attached into the slot, the content is written by the HDD 6 by a relief recording. Further, in the preprogrammed recording processing according to the present invention, after the content has been recorded by the HDD 6 as a result of the relief recording, a piece of dubbing information in a format shown in FIG. 6 is generated with the use of the content ID of the content recorded on the HD as a result of the relief recording, and with either the media management number or the disc name of the disc specified to be used for the recording in the piece of preprogramming information, so that the piece of dubbing information is recorded into the dubbing information storing unit 27.

The dubbing control unit 23b controls, based on the piece of dubbing information, the dubbing processing, which is to dub the content recorded on the HD as a result of the relief recording onto a DVD-RAM. The dubbing processing is controlled when the dubbing control unit 23b is notified by the medium detecting unit 30 that a disc has been attached into the slot. At this time, if the attached disc is the same one as the disc specified in the piece of dubbing information, the dubbing control unit 23b instructs the HDD 6 to read the content identified with the content ID specified in the piece of dubbing information and instructs the DVD drive 7 to write the read content.

The specification information obtaining unit 25 is a functional block that specifies a media management number of a disc specified to be used for the recording of the content in a piece of preprogramming information and notifies the control unit 23 of the specified media management number.

More specifically, in a case where a piece of preprogramming information uses a media management number in order to specify which disc is to be used for the recording, to specify a media management number means to obtain a media management number out of a piece of preprogramming information. On the other hand, in a case where a piece of preprogramming information uses a disc name in order to specify which disc is to be used for the recording, to specify a media management number means to obtain a media management number that corresponds to the disc name with the use of a media management list stored in the media management list storing unit 32.

Hereafter, each media management number which the specification information obtaining unit 25 notifies the control unit 23 of will be referred to as a piece of "specification information".

The media management number obtaining unit 26 is a functional block that reads a media management number from a disc attached into a disc and notifies the control unit 23 of the read media management number.

The recording unit 28 controls the writing of a content performed by the HDD 6 and the DVD drive 7, and further has either the HDD 6 or the DVD drive 7 record a piece of content information in correspondence with the recorded content.

The displaying unit 29 is a functional block that controls the warning processing, which is to warn the user that a content is recorded by a relief recording. Controlling the warning processing means to control the OSD provided by the OSD generating unit 4 and the overlay unit 5 and to display, on the monitor 102, a warning image which requests that the user should attach a disc.

The medium detecting unit 30 is a functional block that detects whether a disc is attached into the slot or not, and notifies the controlling unit 23 of the result of the detection.

When a new disc of which the media management number has not been registered is attached into the slot, the media management number setting unit 31 records a new media management number onto this disc. At this time, the media management number setting unit 31 further registers information about the new disc into the media management list stored in the media management list storing unit 32.

Specifically, the preprogramming information storing unit 22, the dubbing information storing unit 27, and the media management list storing unit 32 are each an area that is reserved within the EEPROM as a result of execution of a computer program. Because the EEPROM is nonvolatile, information recordedin these areas are not lost even when the power of the hybrid recorder 100 is turned off. The preprogramming information storing unit 22 is operable to store therein a piece of preprogramming information in a format shown in FIG. 4 . The dubbing information storing unit 27 is operable to store therein a piece of dubbing information in a format shown in FIG. 6.

The media management list storing unit 32 is operable to store therein a media management list in a format shown in FIG. 5. A media management list shows, for each of the DVD-RAMs 103, a media management number is registered in correspondence with a disc name. This completes the description of the functional configuration of the microcomputer system 9.

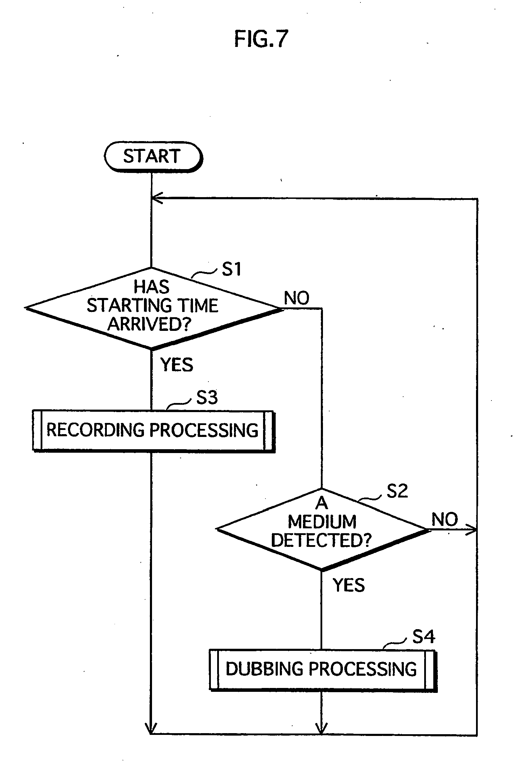

The following describes the computer program that realizes the aforementioned functional configurations. A computer program for realizing the control unit 23 is generated by describing program code that causes a computer to execute the processing procedure shown in the flow charts in FIGs . 7 through 9 in a computer description language. Firstly, the processing procedure performed by the control unit 23 will be explained, with reference to FIG. 7.

The control unit 23 waits for occurrence of an event with a loop made up of Steps S1 and S2. When the time notified by the clock unit 24 gets to be the starting time specified in the preprogramming information (S1 : YES), the control unit 23 performs the preprogrammed recording processing with the preprogrammed recording control unit 23a (S3), and returns to the event waiting loop of Steps S1 and S2.

When having been notified by the medium detecting unit 30 that a disc has been attached into the slot (S2 : YES), the control unit 23 performs the dubbing control with the dubbing control unit 23b (S4), and returns to the event waiting loop of Step S1 and S2. This completes the description of the processing procedure performed by the control unit 23.

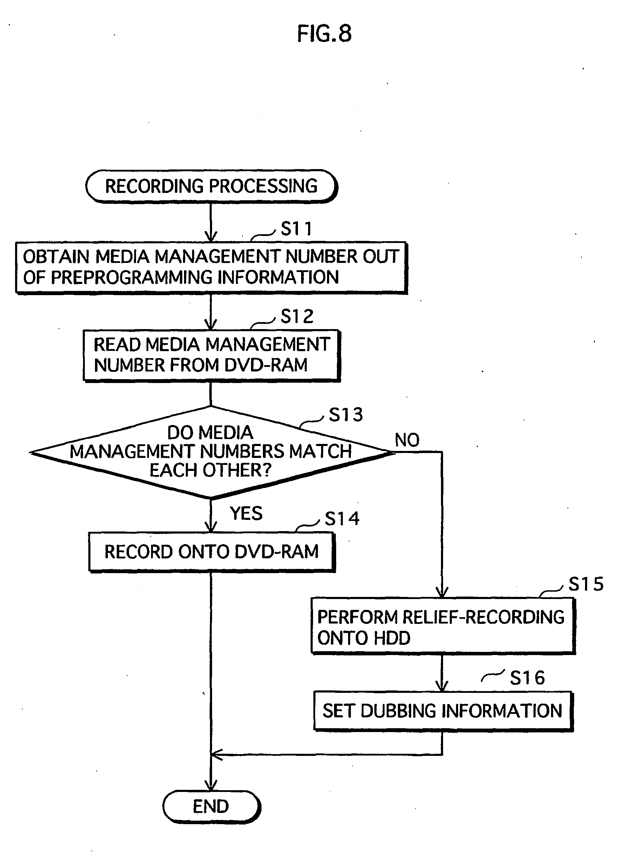

Next, the following describes in detail the preprogrammed recording processing performed by the preprogrammed recording control unit 23a, with reference to FIG. 8. When the starting time has arrived, the preprogrammed recording control unit 23a instructs the specification information obtaining unit 25 to obtain the media management number of the disc specified to be used for the recording in apiece of preprogramming information (S11). The preprogrammed recording control unit 23a further instructs the media management number obtaining unit 26 to obtain the media management number recorded on the disc attached into the slot (S12) and compares the two media management numbers obtained in S11 and S12 (S13).

Here, in a case where the two media management numbers obtained in S11 and S12 match each other (S13: YES), the preprogrammed recording control unit 23a instructs the DVD drive 7 to record the content specified in the piece of preprogramming information onto the disc, until the ending time arrives (S14). On the contrary, in a case where the media management numbers obtained in S11 and S12 do not match each other (S13: NO), the preprogrammed recording control unit 23a instructs the HDD 6 to record the content specified in the piece of preprogramming information onto the HD by a relief recording, until the ending time arrives (S15) and further records a piece of dubbing information into the dubbing information storing unit 27 (S16). The piece of dubbing information is made up of a content ID that uniquely identifies the content having been recorded onto the HD in S15 and the media management number obtained in S1 This completes the description of the processing procedure of the preprogrammed recording processing performed by the preprogrammed recording control unit 23a.

According to the procedure described above, for instance, in a case where "0001" is obtained as a media management number in S11 out of the piece of preprogramming information shown in FIG. 4, if a disc having the media management number "0001" recorded thereon is being attached into the disc, the content is recorded onto this disc attached into the slot. However, if a disc having another media management number besides "0001" recorded thereon is being attached into the slot or if no disc is attached into the slot, the content is recorded onto the HD by a relief recording, and further a piece of dubbing information in which the media management number "0001" is specified is recorded into the dubbing information storing unit 27.

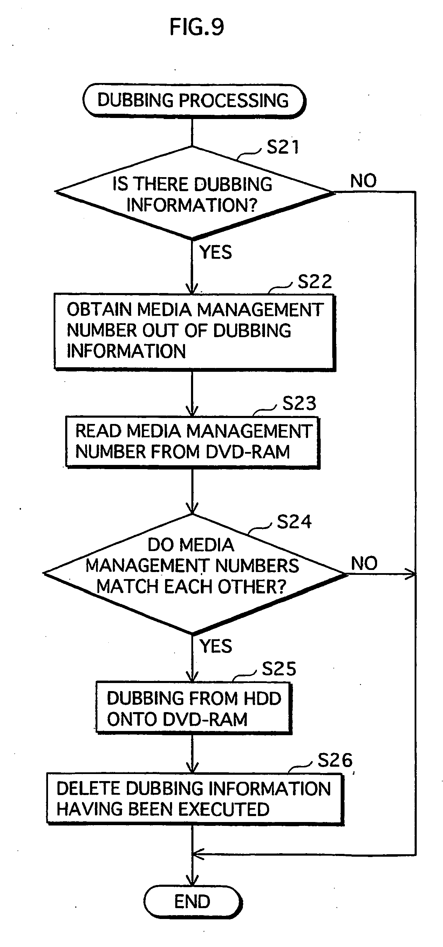

The following describes in detail the dubbing processing performed by the dubbing control unit 23b, with reference to FIG. 9. Having been notified by the medium detecting unit 30 that a disc has been attached into the slot, the dubbing control unit 23b judges whether or not a piece of dubbing information is stored in the dubbing information storing unit 27 (S21).

In a case where a piece of dubbing information is stored in the dubbing information storing unit 27 (S21: YES), the dubbing control unit 23b reads the piece of dubbing information from the dubbing information storing unit 27 and obtains the media management number specified in the piece of dubbing information (S22). The dubbing control unit 23b further instructs the media management number obtaining unit 26 to obtain the media management number recorded on the disc attached into the slot (S23) and compares the two media management numbers obtained in S22 and S23 (S24).

Here, in a case where the two media management numbers obtained in S22 and S23 match each other (S24 : YES), the dubbing control unit 23b instructs the HDD 6 to read the content identified with a content ID specified in the piece of dubbing information from the HD and instructs the DVD drive 7 to record the read content onto the disc attached into the slot (S25). When the dubbing of the content is completed, the dubbing control unit 23a deletes the piece of dubbing information read in S22 from the dubbing information storing unit 27 (S26). This completes the description of the processing procedure of the dubbing processing performed by the dubbing control unit 23b.

According to the procedure described above, for instance, in a case where the dubbing information storing unit 27 stores therein a piece of dubbing information in which "0001" is specified as a media management number, if a disc having another media management number besides "0001" recorded thereon is attached into the disc, the content having been recorded on the HD will not be dubbed. However, in a case where a disc having "0001" recorded as a media management number is attached into the slot, the content whose content ID is specified in the piece of dubbing information will be dubbed. With this arrangement, it is possible to record the content having been recorded on the HD as a result of the relief recording onto a disc specified in the setting of the preprogrammed recording as the disc that the user desires to use for the recording.

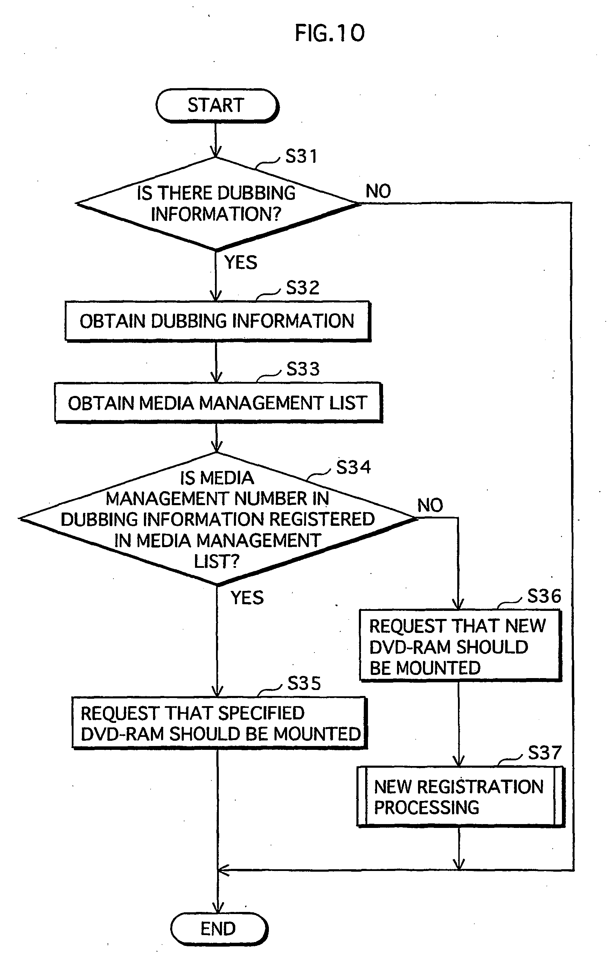

The following describes the warning processing performed by the displaying unit 29. A computer program for realizing the functions of the displaying unit 29 is generated by describing program code that causes a computer to execute the processing, procedure shown in the flow chart in FIG. 10 in a computer description language.

The processing procedure shown in FIG. 10 is performed when the power of the hybrid recorder 100 is turned on or when a new piece of dubbing information is stored into the dubbing information storing unit 27 by the preprogrammed recording control unit 23a. At first, the displaying unit 29 judges whether a piece of dubbing information is stored in the dubbing information storing unit 27 (S31), and in a case where no piece of dubbing information is stored in the dubbing information storing unit 27 (S31: NO), the displaying unit 29 terminates the processing.

In a case where a piece of dubbing information is stored in the dubbing information storing unit 27 (S31: YES), the displaying unit 29 obtains the piece of dubbing information from the dubbing information storing unit 27 (S32) and obtains a media management list stored in the media management list storing unit 32 (S33), so as to judge whether or not the media management number specified in the piece of dubbing information is registered in the media management list (S34).

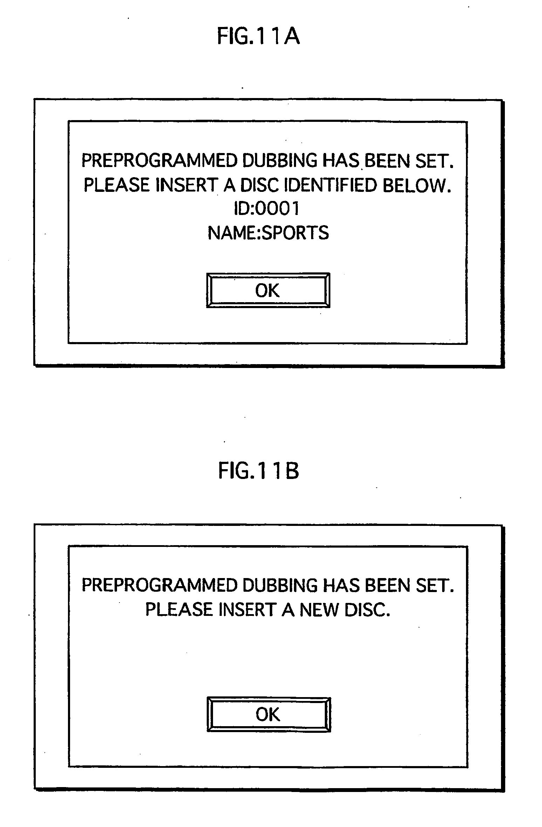

In a case where the media management number in the piece of dubbing information is registered in the media management list (S34: YES), the displaying unit 29 controls the OSD provided by the OSD generating unit 4 and the overlay unit 5, and displays, on the monitor 102, an image for suggesting that a disc having the specified media management number recorded thereon should be attached (S35), and then completes the processing. For example, in a case where "0001" is specified as a media management number in a piece of dubbing information, since the disc whose media management number is "0001" has been registered the media management list shown in FIG. 5, a warning image shown in FIG. 11A will be displayed as an OSD.

The result of the judgment made in S34 indicates that the media management number specified in the piece of dubbing information has not been registered in the media management list (S34 : NO), the displaying unit 29 controls the OSD provided by the OSD generating unit 4 and the overlay unit 5 and displays, on the monitor 102, an image for suggesting that a new disc should be attached which has never been attached to the hybrid recorder 100 and on which no media management number has been recorded (S36). For example, in a case where a piece of dubbing information specifies "0003" as a media management number, since a disc whose media management number is "0003" has not been registered in the media management list shown in FIG. 5, a warning image shown in FIG. 11B will be displayed as an OSD.

After an image for suggesting that a new disc should be attached is displayed in S36, and a new disc is attached, the displaying unit 29 instructs the media management number setting unit 31 to perform the new disc registration processing (S37) and completes the processing. This completes the description of the processing procedure of the warning processing performed by the displaying unit 29.

According to the processing described above, since a warning image is displayed on the monitor 102, the user is able to easily recognize which recording medium should be attached.

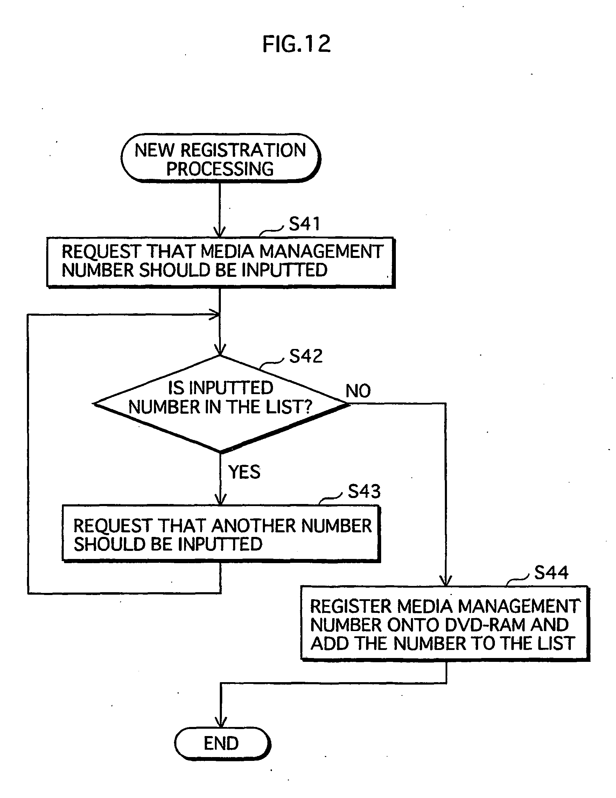

The following describes the new disc registration processing performed by the media management number setting unit 31. A computer program for realizing the functions of the media management number setting unit 31 is generated by describing program code that causes a computer to execute the procedure processing shown in FIG. 12 in a computer description language.

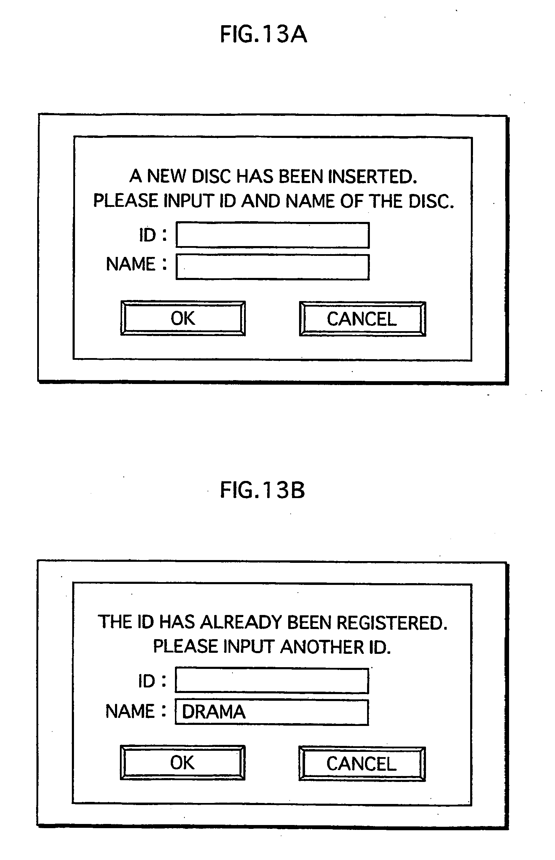

The new disc registration processing is to set a media management number for a new disc. The processing procedure shown in FIG. 12 is performed in a case where a disc on which no media management number is recorded is attached into the slot of the hybrid recorder 100. The media management number setting unit 31 at first controls the OSD provided by the OSD generating unit 4 and the overlay unit 5 and displays, on the monitor 102, an image shown in FIG. 13A for requesting that the user should input a disc name and a candidate for a media management number to be recorded onto the disc (S41).

When having received an input by the user via the image shown in FIG. 13A from the user operation receiving unit 8, the media management number setting unit 31 judges whether or not the candidate for the media management number having been inputted has already been registered in the media management list stored in the media management list storing unit 32 (S42).

In a case where the inputted candidate for the media management number has already been registered in the list (S42 : YES), the media management number setting unit 31 displays as an OSD, on the monitor 102, an image shown in FIG. 13B for requesting that the user should input another candidate (S43). The processing in S42 and S43 are repeated until the user inputs a candidate that has not been registered in the media management list.

When a candidate for the media management number that is not registered in the media management list has been inputted (S42: NO), the media management number setting unit 31 records the inputted candidate onto the disc as the media management number, as well as adds the inputted candidate for the media management number and the disc name to the media management list in such a manner that the number and the name are in correspondence with each other (S43). This completes the description of the processing procedure of the new disc registration processing performed by the media management number setting unit 31.

It should be noted it is acceptable that the image for requesting that a media management number should be inputted provides in advance some candidates of numbers which are not used in the media management list.

As explained above, according to the present embodiment, even if a disc specified in the setting for a preprogrammed recording is not attached when the recording is to start, or even if another disc besides the specified one is attached, it is possible to perform the recording onto the HD by a relief recording and to perform the dubbing from the HD onto the specified disc without troubling the user, so as to eventually have the content recorded onto the specified disc.

It should be noted that, although each piece of preprogramming information is specified according to an input from the user in the present embodiment, it is acceptable that each piece of preprogramming information is specified with other methods.

For example, it is acceptable that a piece of information for specifying a content to be recorded is provided as being recorded on a disc in advance. According to this modification example, it is acceptable that, when a disc is attached into the slot, the preprogramming setting unit 21 reads the piece of information for specifying a content to be recorded from the disc, and a piece of preprogramming information for specifying the attached disc as a disc that should be used for the recording is stored into the preprogramming information storing unit 22.

The following describes in detail the modification example in which the user operation is further simplifiedbecause the piece of information for specifying a content to be recorded is provided as being recorded on a disc in advance.

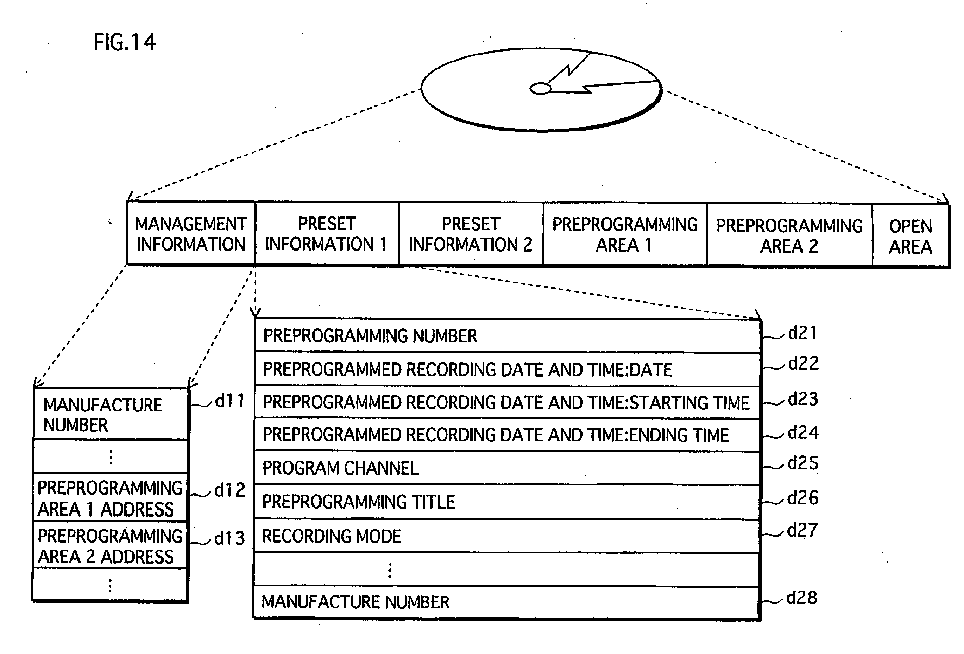

FIG. 14 schematically shows the data structure of a disc on which, when it is provided, a piece of information for specifying a content to be recorded has already been recorded. (Hereafter, such a disc will be referred to as a "preset medium".) A preset medium is a DVD provided by a broadcast company or the like that broadcasts contents. Recorded on a preset medium are a piece of management information and one or more pieces of preset information each of which is for specifying a content to be recorded. One or more preprogramming areas are reserved in the recording area of a preset medium so that contents are recorded in correspondence with the one or more pieces of preset information.

The piece of management information includes the manufacture number of the disc which is d11 and the addresses of the preprogramming areas which are d12 and d13. The preprogramming area addresses d12 and d13 are the addresses of the preprogramming areas, and these areas within the recording arena are recognized by the hybrid recorder 100 as dedicated areas in which contents are recorded; therefore, even if the contents have not been recorded in these areas yet, these areas are not presented to the user as open areas.

Each of the pieces of preset information includes (i) a preprogramming number d21, (ii) a preprogrammed recording date d22, a starting time d23, an ending time d24, and a program channel d25, and a preprogramming title d26, which represent information for specifying a content to be recorded, as well as (iii) a recoding mode d27 for specifying the recording image quality, and also (iv) the manufacture number of the preset medium d28 which represents information for specifying a disc to be used for the recording.

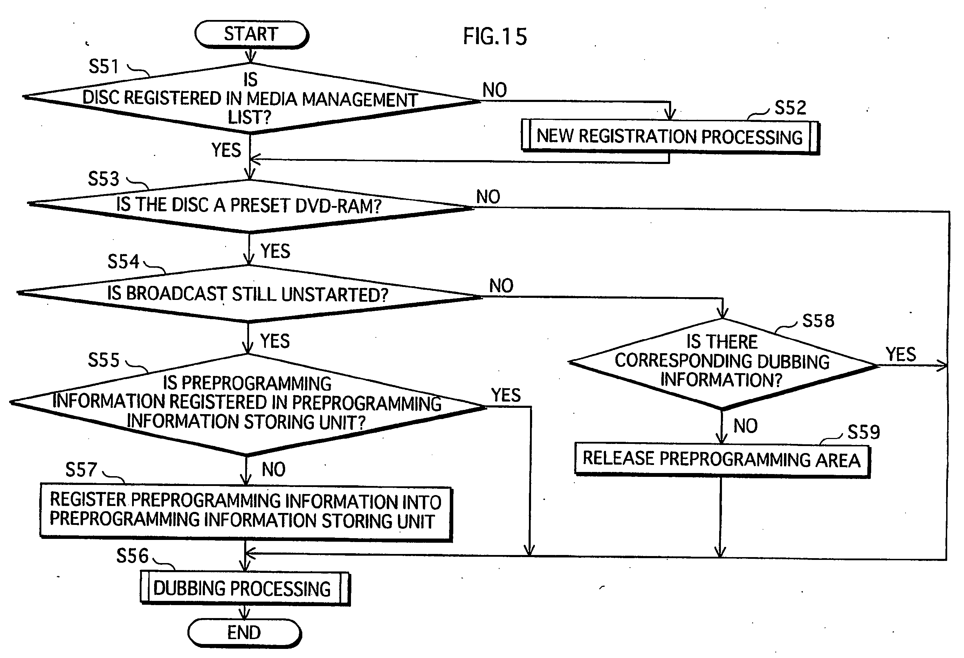

The following describes the preprogramming setting processing performed by the preprogramming setting unit 21 in the present modification example. A computer program for realizing the functions of the preprogramming setting unit 21 in the present modification example is generated by describing program code that causes a computer to execute the processing procedure shown in FIG. 15 in a computer description language.

The processing procedure of the preprogramming setting processing shown in FIG. 15 is performed when a disc is attached onto the hybrid recorder 100. When the medium detecting unit 30 detects that a disc has been attached into the slot, the preprogramming setting unit 21 judges whether or not the attached disc is registered in the media management list (S51). When the judgment result indicates that the attached disc is not registered in the list (S51: NO), the preprogramming setting unit 21 instructs the media management number setting unit 31 to perform the new disc registration processing (S52).

Subsequently, the preprogramming setting unit 21 judges whether or not at least one piece of preset information is recorded on the attached disc (S53). When no piece of preset information is recorded on the disc (S53: NO), the procedure is controlled so that it advance to the dubbing processing performed by the dubbing control unit 23b (S56). When at least one piece of preset information is recorded on the disc (S53: YES), the preprogramming setting unit 21 compares the time indicated by the starting time d23 in the piece of preset information with the current time and judges whether or not the broadcast of the content specified in the piece of preset information has already been started (S54).

When the broadcast is still unstarted (S54: YES), the preprogramming setting unit 21 judges whether or not a piece of preprogramming information for instructing that the content specified in the piece of preset information should be recorded is stored in the preprogramming information storing unit 22 (S55). In a case where a piece of preprogramming information is stored in the preprogramming information storing unit 22 (S55: YES), the procedure is controlled so that it advances to the dubbing processing performed by the dubbing control unit 23b (S56).

In a case where no piece of preprogramming information is stored in the preprogramming information storing unit 22 (S55: NO), the preprogramming setting unit 21 generates a piece of preprogramming information in which the preset medium is specified as the disc to be used for the recording, in other words, the information identified as d28 in the piece of preset information is updated so as to indicate the media management number of the preset medium and stores the generated piece of preprogramming information into the preprogramming information storing unit 22 (Step S57). Subsequently, the dubbing processing is performed by the dubbing control unit 23b (S56), and thus the processing is completed. When the judgment result in S54 indicates that the broadcast of the content specified in the piece of preset information has already been started (S54 : NO), the preprogramming setting unit 21 judges whether or not a piece of dubbing information is stored in the dubbing information storing unit 27, the piece of dubbing information being for instructing that the content specified in the piece of preset information should be dubbed onto the preset medium (S58).

In a case where a piece of dubbing information for instructing that the dubbing onto the preset medium should be performed is stored (S58: YES), the dubbing processing is performed by the dubbing control unit 23b subsequently (S56), and thus the processing is completed.

Conversely, in a case where no piece of dubbing information for instructing that the dubbing onto the preset medium should be performed is stored (S58: NO), the preprogramming setting unit 21 deletes, from the preset medium, the piece of preset information for specifying the content of which the broadcast has already been started, as well as releases the preprogramming area by deleting the corresponding preprogramming area address from the management information (S59). The dubbing processing is performed by the dubbing control unit 23b subsequently (S56), and thus the processing is completed. This completes the description of the preprogramming setting processing according to the present modification example.

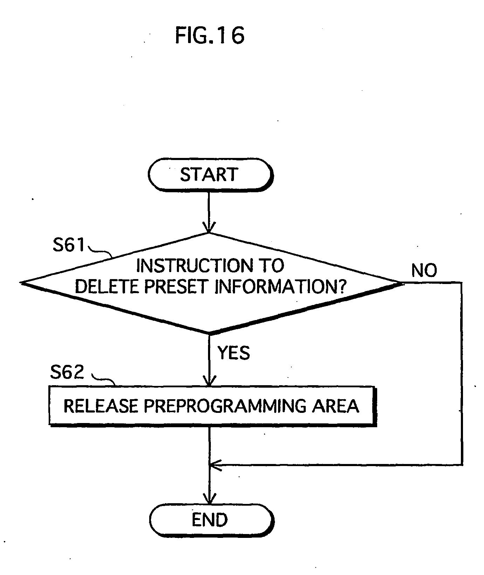

It should be noted that the preset medium described in the present modification example may be used as a normal DVD-RAM disc after the preset information recorded thereon has been deleted. FIG. 16 is a flow chart that shows the processing procedure performed by the hybrid recorder 100 in a case where a piece of preset information is deleted from a preset medium attached into the slot. For instance, in a case where a user operation instructs that the preset information 1 should be deleted from the preset medium shown in FIG. 14 (S61), the preset information 1 is deleted from the preset medium, and also the corresponding preprogramming area address d12 is deleted from the management information (S62).

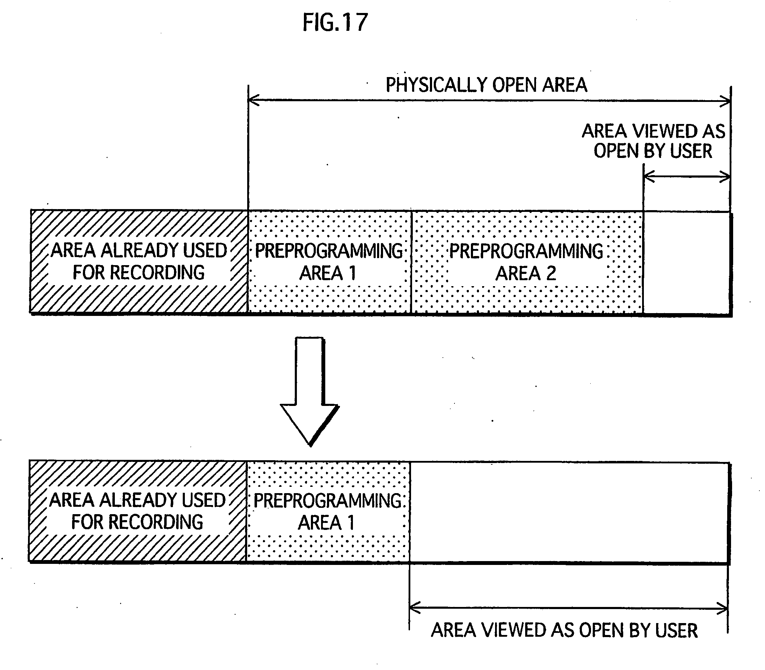

The preprogramming area 1 indicated by the preprogramming area address d12 is not presented as an open area to the user, before the preprogramming area address d12 gets deleted, as shown in the upper section of FIG. 17. After the preprogramming area address d12 has been deleted, the area is presented to the user as an open area, as shown in the lower section of FIG. 17.

As explained above, according to the present modification example, there is no need for the user to input the content to be recorded and the disc to be used for the recording. Accordingly, the user is able to more conveniently have a content recorded on a specified disc.

Further, the preset medium according to the present modification example is expected to achieve a large effect when broadcast companies distribute such preset media as means of promotion. For instance, when a newly-produced broadcast program is to be broadcasted, by distributing in advance a preset medium in which the broadcast date and time of the content are specified, the broadcast company is able to solicit viewers' attention as well as to prevent the viewers from losing the opportunity to view the program, even if the viewers forgot to preprogram the recording of the program. Accordingly, it is possible to make the chances of the broadcast program being viewed higher. Further, if the names of the performers in the content and the program title are printed on the labels of the discs when the discs are dis tributed, each viewer/user is able to recognize at a glance that the content is recorded on the preset medium even after the recording is finished. The viewer/user is therefore able to manage contents extremely easily.

### SECOND EMBODIMENT

In the second embodiment, the hybrid recorder described in the first embodiment is connected to a portable terminal device with a camera via a network such as the Internet. The second embodiment is related to a technique for transmitting a piece of image data photographed by the portable terminal device to the hybrid recorder so that the hybrid recorder records the piece of image data onto a desired disc.

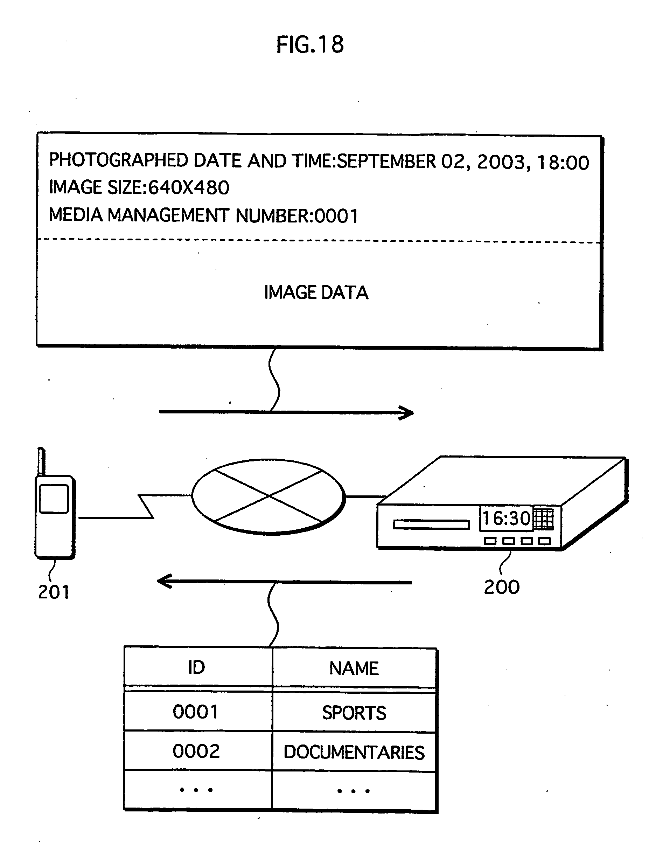

Firstly, explanation is provided on a utilization example of the hybrid recorder 200 according to the second embodiment, with reference to FIG. 18.

The hybrid recorder 200 has a similar hardware configuration as the hybrid recorder 100 described in the first embodiment does and is installed at the user' s home. An external device 201 is a portable terminal device such as a portable phone with a camera, or a PDA and is carried along by the user. The hybrid recorder 200 and the external device 201 are connected to each other via the Internet and are operable to transmit and receive data to and from each other.

The built-in memory inside the external device 201 has a small storage capacity and is not able to store therein many pieces of image data. Accordingly, after the user has photographed outside of his/her home one or more pieces of image data using the external device 201, by transmitting and recording the pieces of image data onto the hybrid recorder 200, the user is able to save many pieces of image data.

In such a case, as shown in FIG. 18, the user is able to obtain a media management list shown in FIG. 5 from the hybrid recorder 200 with the use of the external device 201 and to specify which disc should be used for the recording of the piece of image data by selecting either a media management number or a disc name from the media management list.

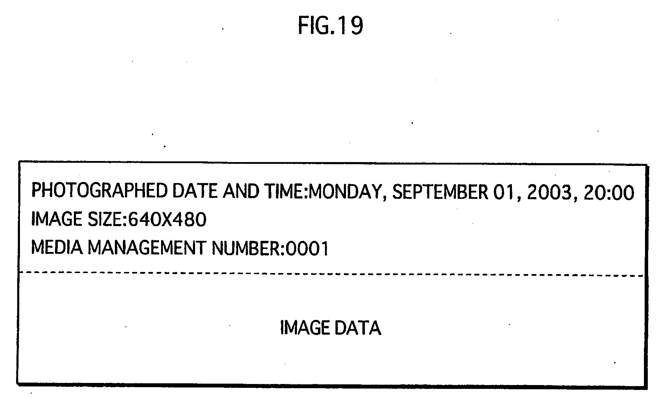

FIG. 19 shows an example of communication data transmitted from the external device 201 to the hybrid recorder 200. In each piece of communication data which instructs that a piece of image data should be recorded, either a media management number or a disc name of a disc specified to be used for the recording is attached to the piece of image data. In the example shown in FIG. 19, the disc "0001" is specified as a disc to be used for the recording with the use of a media management number.

The following describes the configuration of the hybrid recorder 200. The hybrid recorder 200 has a similar hardware configuration as the hybrid recorder 100 does. The difference is that the microcomputer system 9 executes a computer program being different from the one executed in the case of the hybrid recorder 100.

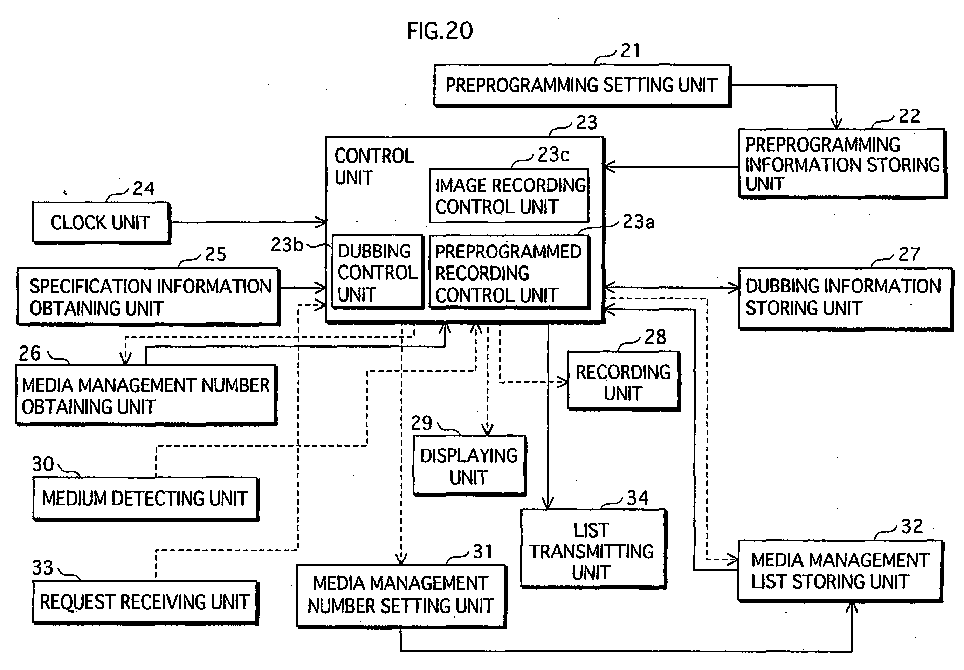

The following describes the functions of the microcomputer system 9 realized by collaboration of a computer program and hardware resources, with reference to FIG. 20.

The configuration of the microcomputer system 9 shown in FIG. 20 is a configuration in which a request receiving unit 33 and a list transmitting unit 34 are added to the configuration described in the first embodiment with reference to FIG. 3, and also an image recording control unit 23c is added to the inside of the control unit 23. In the following description, the components that have already been described in the first embodiment will be referred to with the same reference numbers and the explanation thereof will be omitted. The description will focus on only the components that are different from those in the first embodiment.

The request receiving unit 33 and the list transmitting unit 34 are functional blocks that control the processing of providing a list to the external device 201. The request receiving unit 33 receives a request from the external device 201 requesting that a media management list shouldbe transmitted. The list transmitting unit 34 transmits a media management list to the external device 201.

The image recording control unit 23c within the control unit 23 controls the image recording processing, which is to record a piece of image data included in a piece of communication data received from the external device 201 onto a disc specified, in the piece of communication data, as a disc that should be used for the recording. The characteristic of the control performed by the image recording control unit 23c on the image recording processing lies in that, like the preprogrammed recording processing performed by the preprogrammed recording control unit 23a, in a case where no such disc of which the media management number is specified is attached into the slot, the piece of image data is recorded onto the HD by a relief recording, and further, a piece of dubbing information is stored into the dubbing information storing unit 27, the piece of dubbing information being made up of the content ID of the piece of image data having been recorded onto the HD as a result of the relief recording and either a media management number or a disc name of the disc specified in the piece of communication data. This completes the description of the configuration of the hybrid recorder 200.

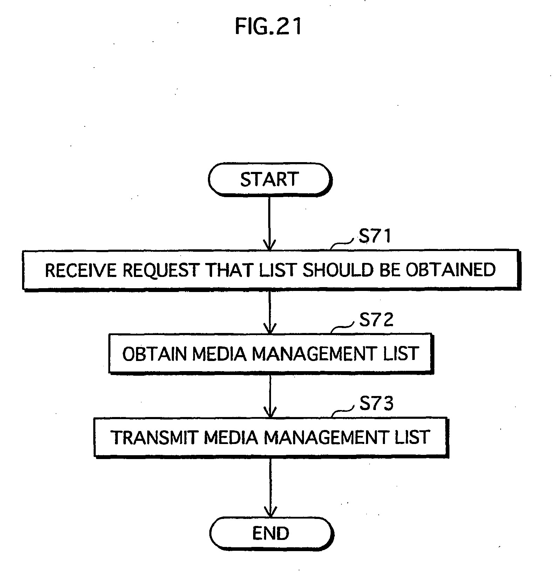

The following describes the processing procedure of the list providing processing. FIG. 21 is a flow chart that shows the processing procedure of the list providing processing.

Having received a request from the external device 201 that a media management list should be obtained, the request receiving unit 33 notifies the list transmitting unit 34 of the address of the request sender (S71). Having received the notification of the address, the list transmitting unit 34 obtains a media management list from the media management list storing unit 32 (S72), and transmits the obtained media management list to the address notified in S71 (S73). This completes the description of the processing procedure of the list providing processing.

As explained above, because a media management list is transmitted to the external device 201, even if the user if using the external device 201 in a remote place, the user is able to easily specify a desired disc.

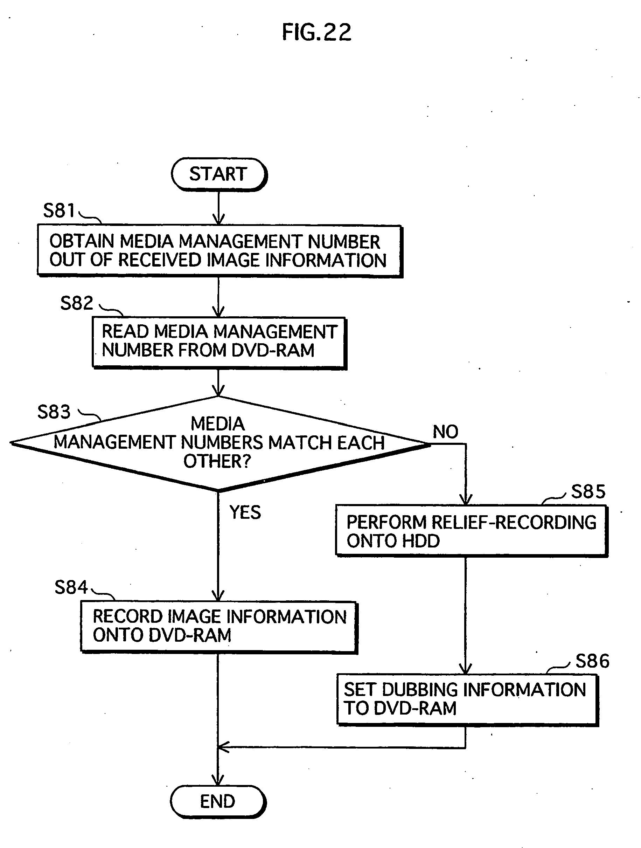

The following describes the processing procedure of the image recording processing. FIG. 22 is a flow chart that shows the processing procedure of the image recording processing. The processing procedure of the image recording processing is performed when the hybrid recorder 200 has received from the external device 201 a piece of communication data which instructs that a piece of image data should be recorded.

The image recording processing performed by the image recording control unit 23c has a processing procedure similar to that of the preprogrammed recording processing shown in FIG. 8 performed by the preprogrammed recording control unit 23a. The difference is that when the image recording control unit 23c instructs the specification information obtaining unit 25 to obtain a piece of specification information in S81, the received piece of communication data, instead of a piece of preprogramming information, is used for the obtainment of the specification information i.e. a media management number.

As explained above, according to the present embodiment, when the hybrid recorder 200 has received from the external device 201 a piece of communication data which instructs that a piece of image data should be recorded, even if a disc specified to be used for the recording in the piece of communication data is not attached in the slot, or even if another disc besides the specified one is attached, the relief recording onto the HD and the copying from the HD to the specified disc are performed without troubling the user, and eventually, the piece of image data is stored onto the specified disc.

It should be noted that the communication between the hybrid recorder 200 and the external device 201 may be directly performed after a connection is established between the hybrid recorder 200 and the external device 201. Alternatively, it is acceptable that (i) a piece of image data and (ii) a piece of information for specifying where the piece of image data should be recorded are attached to a piece of electric mail so that the communication is indirectly performed via a mail server or the like.

### OTHER MODIFICATION EXAMPLES

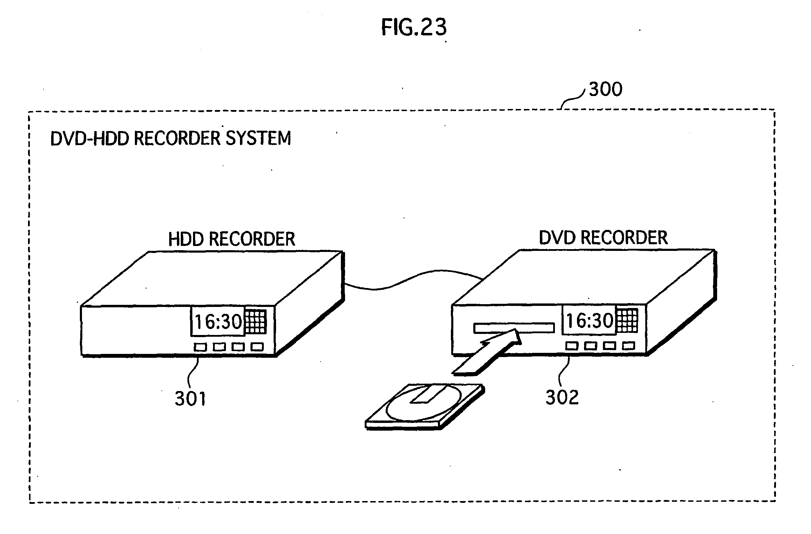

The present invention has been explained so far based on the preferred embodiments. The present invention is not limited to the embodiments described above, needless to say. The following cases are also included in the present invention.
(1) It is possible to construe the present invention as methods for recording contents disclosed in the processing procedures shown in the flow charts described in the embodiments above. Further, it is possible to construe the present invention as a computer program which includes program code that causes a computer to execute the aforementioned processing procedures, or as digital signals converted from such a computer program.
   Additionally, it is acceptable to consider that the present invention is a computer-readable recoding medium e.g. a flexible disc, a hard disk, a CD-ROM, an MO, a DVD, a DVD-ROM, a DVD-RAM, a BD (Blu-ray Disc), a semiconductor memory, or the like, that records such a computer program or such digital signals thereon.
   Further, it is acceptable to consider that the present invention is realized through transmission of such a computer program or such digital via telecommunication lines, wireless or cable transmission network, a network such as the Internet, or the like.
   Furthermore, it is acceptable to execute the aforementioned computer program or digital signals on a dependent computer system by delivering the computer program or digital signals as being recorded on the aforementioned recording medium or as being transmitted via the aforementioned network or the like.
(2) The present invention may be embodied as an LSI for controlling a recording apparatus. It is possible to realize such an LSI by integrating functional blocks as shown with a broken line in FIG. 2. The functional blocks to be integrated are the encoder 2, the decoder 3, the generating unit 4, and the microcomputer system 9 shown in FIG. 3 or FIG. 20. Each of these components and functional blocks may be separately realized as a chip. Alternatively, part of all of these components and functional blocks may be realized as one chip.
   Here, the explanation has been provided as the functional blocks being integrated into an LSI; however, such an LSI may be referred to, depending on the level of integration, an IC, a system LSI, a super LSI, or an ultra LSI.
   The functional blocks do not have to be integrated into an LSI; it is acceptable to integrate the functional blocks into a dedicated circuit or a general-purpose processor. It is further acceptable to utilize an FPGA (Field Programmable Gate Array) which is programmable after being manufactured or to utilize a reconfigurable processor in which the connections of the circuit cells inside and the setting are reconfigurable.
   Furthermore, due to future development of semiconductor technology and other technology derived from such development, in the event that other techniques for providing other types of integrated circuits to replace LSIs become available, it is naturally acceptable to integrate the functional blocks and components described above with the use of such techniques. One possibility of such a technique is application of bio technology.
(3) The present invention may be embodied as a recording system made up of an apparatus having a relief recording medium and another apparatus having a drive unit for a portable recording medium.
   For example, FIG. 23 shows such a recording system, which is the DVD-HDD recorder system 300 being made up of an HDD recorder 301 and a DVD recorder 302. With the DVD-HDD recorder system 300, it is possible to achieve the functions of the recording apparatus of the present invention by realizing the functional blocks shown in FIG. 3 or FIG. 20 through execution of a computer program by one or both of the microcomputer systems included in the HDD recorder 301 and the DVD recorder 302. In a case where the functional blocks are realized by the microcomputer system included in the HDD recorder 301, the dubbing processing can be triggered when the DVD recorder 302 notifies the HDD recorder 301 that a disc has been attached.
(4) In the embodiments described above, the present invention is explained on the basis that DVD-RAMs are used as portable recording media; however, the characteristics of the recording apparatus of the present invention do not depend on physical properties of such recording media. It is possible apply the recording apparatus of the present invention to any types of recording media as long as they are portable recording media onto which contents can be recorded. For example, the present invention may be applied to any of the following: optical discs such as Blu-ray Discs, DVD-RWs, DVD+RWs, DVD-Rs, DVD+Rs, CD-Rs, and CD-RNs; optical-magnetic discs such as PDs and MOs; semiconductor cards such as SD memory cards, compact flash (R) cards, Smart Media, Memory Sticks, MultiMedia Cards, and PCM-CIA Cards; removable hard disk drives such as ORB, Jaz, SparQ, SyJet, EZFlyer, and microdrives; and magnetic recording discs.
(5) In the embodiments described above, an example has been explained in which a combination of a recording medium for the purpose of a relief recording and a portable recording medium are used, both of which use a same encoding method for recording a content; however, the present invention may be applied to a case that uses a combination of two types of recording media which use mutually different encoding methods for recording a content.
   For example, the present invention may be applied to a combination of an HD and an SD memory card, or to a combination of any of an optical disc, an optical-magnetic disc, a semiconductor memory card, a magnetic recording disc, a removable hard disk drive, and a built-in type HD, and the like. For example, in a case where a combination of an HD and an SD memory card is used as recording media, the recording apparatus of the present invention may comprise an encoder and a decoder that are compatible with the SD-Video format in addition to an encoder and an decoder that are compatible with the MPEG 2 format, so as to be able to perform the dubbing of a content between the HD and the SD memory card.
(6) The recording apparatus of the present invention is able to achieve its functions if the recording apparatus comprises a recording medium for relief recordings and at least one drive unit for portable recording media; however, it is acceptable that the recording apparatus comprises two or more drive units for portable recording media.
   Further, in a case there the recording apparatus comprises two or more drive units for portable recording media, it is acceptable to use a portable recording medium attached into one of the drive units as a recording medium for relief recordings. In such a case, when the recording apparatus performs a relief recording of a content, a piece of information is added to the piece of dubbing information. The added piece of information uniquely identifies the portable recording medium on which the content has been recorded as a result of the relief recording. With this arrangement, the recording apparatus is able to judge, based on the piece of dubbing information, whether or not each of the portable recording medium used for the relief recording of the content and the portable recording medium specified in the specification information is attached to the drive unit. Accordingly, by performing the dubbing of the content in a case where both of those portable recording media have been attached in the slots, the recording apparatus is able to eventually have the content recorded onto the portable recording medium specified in the specification information.
(7) In the embodiments described above, an arrangement is made wherein, when a portable recording medium owned by the user is attached to the drive unit of the recording apparatus for the first time, a media management number is recorded onto the portable recording medium in order to identify each portable recording media; however, it is acceptable to use other types of information for identifying each portable recording medium. For example, in a case where a manufacture number that uniquely identifies a recording medium is set for each recording medium at the time of manufacturing, it is acceptable that the recording apparatus reads such a manufacture number from each recording medium and uses it for identification of each recording medium.
   Further, it is acceptable that media management numbers for identifying portable recording media are not inputted by the user, but the numbers that are not used in a media management list are automatically registered.
(8) In the embodiments described above, media management numbers are used as the specification information for uniquely identifying each of the portable recording media; however, it is acceptable to use, as the specification information, a piece of information for identifying a group that is made up of one or more portable recording media.
   For example, in a case where a plurality of recording media belonging to a group all have a same media management number in common, when the media management number is specified in the specification information, the content is recorded onto one of the recording media having the same media management number.
   As another example, when the new disc registration processing is performed, in a case where a plurality of recording media have belonging to a group all have a same name in common, it is possible to register the name for the group into a media management list. With this arrangement wherein the name for the group is registered into a media management list, when the name for the group is specified in the specification information, the content is recorded onto one of the recording media which are registered in the media management list under the same name.
   These examples are effective in a case where the content does not have to be recorded onto one particular portable recording medium but the user wishes to understand, to some extent, on which recording media the content is recorded. More specifically, in a case where a recording apparatus is shared among a plurality of users, if recording media are organized into groups that each represent a user, when a user who has set a preprogrammed recording tries to find out which recording medium has the content being recorded, the user is able to save the trouble of checking to see what is recorded on each of the other users' recording media.
(9) In the embodiments described above, in order to specify which recording medium should be used for the recording of a content, a piece of information, such as a media management number or a disc name, for identifying each portable recording medium is used; however, it is acceptable to use other types of information as the specification information according to the present invention, as long as the information is able to specify where the content should be recorded.
   For example, in a case where recording areas of a portable recording medium are managed with a file system having a directory structure, it is acceptable to attach an ID to each of the directories so that each of them is uniquely identified, and the specification of where the content is to be recorded can be made with the use of the directory IDs.
(10) In the embodiments described above, the preprogramming information, the dubbing information, and the media management list are recorded on an EEPROM; however, it is acceptable to record these kinds of information into other recording areas. It should be noted that it is preferable if each of the recording areas used for recording these kinds of information is a nonvolatile recording area or a recording area supported by a battery backup system.
   For example, the dubbing information may be recorded onto a hard disk along with the content recorded on the hard disk as a result of a relief recording.
(11) In the embodiments described above, explanation is provided for the cases where the content recorded by the recording apparatus is a broadcast program and where the content recorded by the recording apparatus is image data; however, the content recorded by the recording apparatus of the present invention may be moving images, still images, sound, computer programs, or the like. Further, it is acceptable to apply the present invention to a combination made up of any of moving images, still images, sound, computer programs, and the like.
(12) In the first embodiment, the user inputs information for specifying a content as the setting for a preprogrammed recording; however, it is acceptable that the user directly inputs the broadcast date, the starting time, the ending time, and the channel for the content. Alternatively, it is acceptable to have an EPG displayed on the screen so that the user is able to specify the content. It is also acceptable to use G-codes (registered trademark), or the like.
   The present invention may be applied to a case where the recording apparatus searches for a content related to a keyword inputted by the user with the use of an EPG so that the content found in the search is recorded. In such a case, it is possible to achieve an effect of being able to easily manage contents, particularly when a specified disc to be used for the recording is registered in a media management under a name that is the same as the keyword.
(13) In the first embodiment described above, an image is displayed for requesting that a portable recording medium specified to be used for the recording should be attached, so that the user is warned that a content has been recorded by a relief recording; however, it is acceptable to use other methods for notifying the user that the content has been recorded by a relief recording as long as it is possible to call the user's attention. For example, it is acceptable to use some sound or voice to warn the user that a relief recording has been performed.
   Further, in the first embodiment, the user is notified that the content is recorded by a relief recording when the power of the recording apparatus is turned on and a piece of dubbing information is stored; however, the present invention is not limited to this example. It is acceptable that the user is notified when another event being a trigger occurs. For example, it is acceptable that the user is notified that the content has been recorded by a relief recording when the disc attached into the slot is replaced with another disc.
(14) It is acceptable to combine any of the first and second embodiments and the modification examples described above.

### Industrial Applicability

The recording apparatus of the present invention is effective when it is applied to a hybrid recorder comprising a DVD drive and an HDD.

## Claims

1. A recording apparatus (100) comprising:
a drive unit (7) operable to have a portable recording medium (103) removably attached;
a relief recording medium (6);
**characterized by** further comprising
an obtaining unit (25) operable to obtain specification information which specifies one or more portable recording media (103) to be used for recording a content;
a recording control unit (23) operable to perform control so that (i) in a case where one of the specified portable recording media is attached to said drive unit when the content is to be recorded, the content is recorded onto the attached portable recording medium, and (ii) in a case where none of the specified portable recording media are attached to said drive unit when the content is to be recorded, the content is recorded onto said relief recording medium; and
a dubbing control unit (23) operable to when triggered by a detection that one of the specified portable recording media is attached to said drive unit after the content has been recorded onto the relief recording medium, dub the recorded content from said relief recording medium onto the one of the specified portable recording media.

2. The recording apparatus of Claim 1, wherein
the specification information specifies one portable recording medium, using a piece of identification information which uniquely identifies the one portable recording medium; and
said recording control unit judges that the specified portable recording medium is attached to said drive unit when a currently attached portable recording medium is identified with the piece of identification information.

3. The recording apparatus of Claim 2, wherein
the specified portable recording medium has the piece of identification information recorded thereon; and
said recording control unit makes the judgment by comparing the piece of identification information recorded on a currently attached portable recording medium with the piece of identification information used by the specification information.

4. The recording apparatus of Claim 1, wherein
the specification information specifies the one or more portable recording media, using a piece of identification information that identifies a group made up of the one or more portable recording media; and
said recording control unit judges that one of the specified portable recording media is attached to said drive unit when a currently attachedportable recordingmediumbelongs to the group identified with the piece of identification information.

5. The recording apparatus of Claim 4, wherein
each of the one or more specified portable recording media has the piece of identification information recorded thereon, the piece of identification information showing the group to which each recording medium belongs; and
said recording control unit makes the judgment by comparing the piece of identification information recorded on a currently attached portable recording medium with the piece of identification information used by the specification information.

6. The recording apparatus of Claim 4, further comprising
a list storing unit that stores a list showing the one or more specified portable recording media belonging to the group;
wherein said recording control unit makes the judgment by referring to the list.

7. The recording apparatus of Claim 1, wherein:
said obtaining unit is further operable to obtain time information which indicates a time at which the content is broadcasted as a broadcast program, and
the recording control unit performs the control so that the content is recorded at the time indicated by the time information.

8. The recording apparatus of Claim 7, wherein:
the obtaining unit obtains the specification information and the time information based on a piece of preprogramming information provided by a user who preprograms the recording of the content.

9. The recording apparatus of Claim 7, wherein:
the specification information specifies one portable recording medium;
a piece of preset information is recorded on the specified portable recording medium, the piece of preset information instructing that the content should be recorded and including the time information; and
when the piece of preset information is read from the portable recording medium, the obtaining unit obtains (i) the specification information for instructing that the content should be recorded onto the portable recording medium having the piece of preset information, and (ii) the time information included in the piece of preset information.

10. The recording apparatus of Claim 9, further comprising
an area releasing unit operable to, in a case where after the time indicated by the time information has arrived and the content is not recorded on either of said relief recording medium and the specified portable recording medium having the piece of preset information recorded thereon, release an area that is within the specified portable recording medium having the piece of preset information and is reserved for the recording of the content.

11. The recording apparatus of Claim 9, further comprising:
an area releasing unit operable to, in a case where the piece of preset information is deleted from the specified portable recording medium, release an area that is within the specified portable recording medium having the piece of preset information and is reserved for the recording of the content.

12. The recording apparatus of Claim 1, wherein:
the content is a piece of image data included in communication data which the recording apparatus receives from an external device operable to communicate with said recording apparatus;
the obtaining unit obtains the specification information from the communication data; and
said recording control unit performs the control of recording the content when said recording apparatus has received the communication data from the external device.

13. The recording apparatus of Claim 12, further comprising
a list storing unit that stores a list showing options of portable recording media among which the one or more portable recording media specified in the specification information can be selected from; and
a notifying unit operable to notify the external device of the options of the portable recording media shown in the list.

14. The recording apparatus of Claim 1, further comprising
a presenting unit operable to present a warning to a user when the content has been recorded onto said relief recording medium.

15. The recording apparatus of Claim 14, wherein:
the warning presented by said presenting unit suggests that one of the specified portable recording media should be attached to said drive unit.

16. The recording apparatus of Claim 14, further comprising
a list storing unit that stores a list showing one or more portable recording media, wherein
in a case where at least one of the specified portable recording media is shown in the list, said presenting unit presents a warning which suggests that the at least one of the specified portable recording media should be attached to said drive unit; and
in a case where none of the specified portable recording media are shown in the list, said presenting unit presents a warning which suggests that any portable recording medium except for the one or more portable recording media shown in the list should be attached to said drive unit.

17. An integrated circuit for a recording apparatus (100) which includes a drive unit (7) operable to have a portable recording medium (103) removably attached and a relief recording medium (6) said integrated circuit comprising:
an obtaining unit (25) operable to obtain specification information which specifies one or more portable recording media to be used for recording a content;
a recording control unit (23) operable to perform control so that (i) in a case where one of the specified portable recording media is attached to the drive unit when the content is to be recorded, the content is recorded onto the attached portable recording medium, and (ii) in a case where none of the specified portable recording media are attached to the drive unit when the content is to be recorded, the content is recorded onto the relief recording medium; and
a dubbing control unit (23) operable to, when triggered by a detection that one of the specified portable recording media is attached to said drive unit after the content has been recorded onto the relief recording medium, dub the recorded content from said relief recording medium onto the one of the specified portable recording media.

18. A computer program to be executed by a computer which includes a drive unit operable to have a portable recording medium removably attached and a relief recording medium, said computer program comprising:
program code operable to cause the computer to obtain specification information which specifies one or more portable recording media to be used for recording a content;
program code operable to cause the computer to,(i) in a case where one of the specified portable recording media is attached to the drive unit when the content is to be recorded, record the content onto the attached portable recording medium, and (ii) in a case where none of the specified portable recording media are attached to the drive unit when the content is to be recorded, record the content onto the relief recording medium; and
program code operable to cause the computer to, when triggered bv a detection that one of the specified portable recording media is attached to said drive unit after the content has been recorded onto the relief recording medium, dub the recorded content from the relief recording medium onto the one of the specified portable recording media.

19. A content recording method used by a recording apparatus that includes a drive unit (7) operable to have a portable recording medium (103) removably attached and a relief recording medium (6), said content recording method comprising:
obtaining specification information which specifies one or more portable recording media to be used for recording a content;
(i) in a case where one of the specified portable recording media is attached to the drive unit when the content is to be recorded, recording the content onto the attached portable recording medium, and (ii) in a case where none of the specified portable ' recording media are attached to the drive unit when the content is to be recorded, recording the content onto the relief recording medium; and
when triggered bv a detection that one of the specified portable recording media is attached to said drive unit after the content has been recorded onto the relief recording medium, dubbing the recorded content from the relief recording medium onto the one of the specified portable recording media.

20. A recording medium for use with the recording apparatus of claim 1 comprising:
apiece of preset information for instructing said recording apparatus to record a content;
wherein said piece of preset information includes:
program information for identifying a broadcast program for broadcasting the content;
specification information for instructing that the content should be recorded onto said recording medium; and
area information for specifying a preprogramming area within said recording medium into which only the content is allowed to be recorded.

## Patentansprüche

1. Aufzeichnungsvorrichtung (100), die umfasst:
eine Laufwerkeinheit (7), in die in Funktion ein tragbares Aufzeichnungsmedium (103) herausnehmbar eingelegt werden kann;
ein Ersatz-Aufzeichnungsmedium (6),
**dadurch gekennzeichnet, dass** sie des Weiteren umfasst:
eine Erfassungseinheit (25), mit der in Funktion Spezifikationsinformationen erfasst werden können, die ein oder mehrere tragbare/s Aufzeichnungsmedium/medien (103) spezifizieren, das/die zum Aufzeichnen eines Inhaltes verwendet werden soll/sollen;
eine Aufzeichnungs-Steuereinheit (23), mit der in Funktion Steuerung so durchgeführt werden kann, dass:
I in einem Fall, in dem eines der spezifizierten tragbaren Aufzeichnungsmedien in die Laufwerkeinheit eingelegt ist, wenn der Inhalt aufgezeichnet werden soll, der Inhalt auf das eingelegte tragbare Aufzeichnungsmedium aufgezeichnet wird, und
II in einem Fall, in dem keines der spezifizierten tragbaren Aufzeichnungsmedien in die Laufwerkeinheit eingelegt ist, wenn Inhalt aufgezeichnet werden soll, der Inhalt auf das Ersatz-Aufzeichnungsmedium aufgezeichnet wird; und
eine Überspiel-Steuereinheit (23), mit der in Funktion, wenn sie durch eine Erfassung dahingehend ausgelöst wird, dass eines der spezifizierten tragbaren Aufzeichnungsmedien in die Laufwerkeinheit gelegt wird, nachdem der Inhalt auf das Ersatz-Aufzeichnungsmedium aufgezeichnet worden ist, der aufgezeichnete Inhalt von dem Ersatz-Aufzeichnungsmedium auf das eine der spezifizierten tragbaren Aufzeichnungsmedien überspielt werden kann.

2. Aufzeichnungsvorrichtung nach Anspruch 1, wobei
die Spezifizierungsinformationen ein tragbares Aufzeichnungsmedium unter Verwendung eines Identifizierungsinformationselementes spezifizieren, das das eine tragbare Aufzeichnungsmedium eindeutig identifiziert; und
die Aufzeichnungs-Steuereinheit feststellt, dass das spezifizierte tragbare Aufzeichnungsmedium in die Laufwerkeinheit eingelegt ist, wenn ein aktuell eingelegtes tragbares Aufzeichnungsmedium mit dem Identifizierungsinformationselement identifiziert wird.

3. Aufzeichnungsvorrichtung nach Anspruch 2, wobei:
das Identifizierungsinformationselement auf dem spezifizierten tragbaren Aufzeichnungsmedium aufgezeichnet ist; und
die Aufzeichnungs-Steuereinheit die Feststellung trifft, indem sie das auf einem aktuell eingelegten tragbaren Aufzeichnungsmedium aufgezeichnete Identifizierungsinformationselement mit dem von den Spezifizierungsinformationen verwendeten Identifizierungsinformationselement vergleicht.

4. Aufzeichnungsvorrichtung nach Anspruch 1, wobei
die Spezifizierungsinformationen das eine oder die mehreren tragbaren Aufzeichnungsmedium/Aufzeichnungsmedien unter Verwendung eines Identifizierungsinformationselementes spezifizieren, das eine Gruppe identifiziert, die aus dem einen oder den mehreren Aufzeichnungsmedium/Aufzeichnungsmedien besteht; und
die Aufzeichnungs-Steuereinheit feststellt, dass eines der spezifizieren tragbaren Aufzeichnungsmedien in die Laufwerkeinheit eingelegt ist, wenn ein aktuell eingelegtes tragbares Aufzeichnungsmedium zu der mit dem Identifizierungsinformationselement identifizierten Gruppe gehört.

5. Aufzeichnungsvorrichtung nach Anspruch 4, wobei
auf jedem von dem einen oder den mehreren spezifizierten tragbaren Aufzeichnungsmedium/Aufzeichnungsmedien das Identifizierungsinformationselement aufgezeichnet ist, wobei das Identifizierungsinformationselement die Gruppe zeigt, zu der jedes Aufzeichnungsmedium gehört; und
die Aufzeichnungs-Steuereinheit die Feststellung trifft, indem sie das auf einem aktuell eingelegten tragbaren Aufzeichnungsmedium aufgezeichnete Identifizierungsinformationselement mit dem durch die Spezifizierungsinformationen verwendeten Identifizierungsinformationselement vergleicht.

6. Aufzeichnungsvorrichtung nach Anspruch 4, die des Weiteren umfasst:
eine Listen-Speichereinheit, die eine Liste speichert, die das eine oder die mehreren spezifizierten Aufzeichnungsmedium/Aufzeichnungsmedien zeigt, das/die zu der Gruppe gehört/gehören;
wobei die Aufzeichnungs-Steuereinheit die Feststellung trifft, indem sie auf die Liste Bezug nimmt.

7. Aufzeichnungsvorrichtung nach Anspruch 1, wobei:
die Erfassungseinheit des Weiteren so betrieben werden kann, dass sie Zeitinformationen erfasst, die eine Zeit anzeigen, zu der der Inhalt als ein Rundfunkprogramm gesendet wird, und
die Aufzeichnungs-Steuereinheit die Steuerung so durchführt, dass der Inhalt zu der durch die Zeitinformationen angezeigten Zeit aufgezeichnet wird.

8. Aufzeichnungsvorrichtung nach Anspruch 7, wobei
die Erfassungseinheit die Spezifizierungsinformationen und die Zeitinformationen auf Basis eines Vorprogrammierungsinformationselementes ermittelt, das einem Benutzer bereitgestellt wird, der die Aufzeichnung des Inhaltes vorprogrammiert.

9. Aufzeichnungsvorrichtung nach Anspruch 7, wobei:
die Spezifizierungsinformationen ein tragbares Aufzeichnungsmedium spezifizieren;
ein voreingestelltes Informationselement auf dem spezifizierten tragbaren Aufzeichnungsmedium aufgezeichnet ist, wobei das voreingestellte Informationselement anweist, dass der Inhalt aufgezeichnet werden sollte, und es die Zeitinformationen enthält; und
wenn das voreingestellte Informationselement von dem tragbaren Aufzeichnungsmedium gelesen wird, die Erfassungseinheit erfasst:
I die Spezifizierungsinformationen, die anweisen, dass der Inhalt auf das tragbaren Aufzeichnungsmedium aufgezeichnet werden sollte, das das voreingestellte Informationselement aufweist, und
II die in dem voreingestellten Informationselement enthaltenen Zeitinformationen.

10. Aufzeichnungsvorrichtung nach Anspruch 9, die des Weiteren umfasst:
eine Bereich-Freigabeeinheit, die so betrieben werden kann, dass sie, wenn, nachdem die durch die Zeitinformationen angezeigte Zeit gekommen ist und der Inhalt weder auf das Ersatz-Aufzeichnungsmedium noch auf das spezifizierte tragbare Aufzeichnungsmedium mit dem darauf aufgezeichneten voreingestellten Informationselement aufgezeichnet wird, einen Bereich freigibt, der innerhalb des spezifizierten tragbaren Aufzeichnungsmediums mit dem voreingestellten Informationselement liegt und für die Aufzeichnung des Inhaltes reserviert ist.

11. Aufzeichnungsvorrichtung nach Anspruch 9, die des Weiteren umfasst:
eine Bereich-Freigabeeinheit, die so betrieben werden kann, dass sie, wenn das voreingestellte Informationselement von dem spezifizierten tragbaren Aufzeichnungsmedium gelöscht wird, einen Bereich freigibt, der innerhalb des spezifizierten tragbaren Aufzeichnungsmediums mit dem voreingestellten Informationselement liegt und für die Aufzeichnung des Inhaltes reserviert ist.

12. Aufzeichnungsvorrichtung nach Anspruch 1, wobei:
der Inhalt ein Bilddatenelement ist, das in Kommunikationsdaten enthalten ist, die die Aufzeichnungsvorrichtung von einer externen Einrichtung empfängt, die in Funktion mit der Aufzeichnungsvorrichtung kommunizieren kann;
die Erfassungseinheit die Spezifizierungsinformationen aus den Kommunikationsdaten erfasst; und
die Aufzeichnungs-Steuereinheit die Steuerung der Aufzeichnung des Inhaltes durchführt, wenn die Aufzeichnungsvorrichtung die Kommunikationsdaten von der externen Einrichtung empfangen hat.

13. Aufzeichnungsvorrichtung nach Anspruch 12, die des Weiteren umfasst:
eine Listen-Speichereinheit, die eine Liste speichert, die Optionen tragbarer Aufzeichnungsmedien zeigt, aus denen das eine oder die mehreren tragbaren Aufzeichnungsmedium/Aufzeichnungsmedien, das/die in den Spezifizierungsinformationen spezifiziert ist/sind, ausgewählt werden kann/können;
eine Mitteilungseinheit, die so betrieben werden kann, dass sie der externen Einrichtung die Optionen der in der Liste gezeigten tragbaren Aufzeichnungsmedien mitteilt.

14. Aufzeichnungsvorrichtung nach Anspruch 1, die des Weiteren umfasst:
eine Anzeigeeinheit, die so betrieben werden kann, dass sie einem Benutzer eine Warnung anzeigt, wenn der Inhalt auf das Ersatz-Aufzeichnungsmedium aufgezeichnet worden ist.

15. Aufzeichnungsvorrichtung nach Anspruch 14, wobei:
die durch die Anzeigeeinheit angezeigte Warnung vorschlägt, dass eines der spezifizieren tragbaren Aufzeichnungsmedien in die Laufwerkeinheit eingelegt werden sollte.

16. Aufzeichnungsvorrichtung nach Anspruch 14, die des Weiteren umfasst:
eine Listen-Speichereinheit, die eine Liste speichert, die ein oder mehrere tragbare Aufzeichnungsmedium/Aufzeichnungsmedien zeigt, wobei
in einem Fall, in dem wenigstens eines der spezifizierten tragbaren Aufzeichnungsmedien in der Liste gezeigt wird, die Anzeigeeinheit eine Warnung anzeigt, die vorschlägt, dass das wenigstens eine der spezifizierten tragbaren Aufzeichnungsmedien in die Laufwerkeinheit eingelegt werden sollte; und
in einem Fall, in dem keines der spezifizierten tragbaren Aufzeichnungsmedien in der Liste gezeigt ist, die Anzeigeeinheit eine Warnung anzeigt, die vorschlägt, dass jedes beliebige tragbare Aufzeichnungsmedium mit Ausnahme des einen oder der mehreren tragbaren Aufzeichnungsmediums/Aufzeichnungsmedien, das/die in der Liste gezeigt wird/werden, in die Laufwerkeinheit eingelegt werden sollte.

17. Integrierte Schaltung für eine Aufzeichnungsvorrichtung (100), die eine Laufwerkeinheit (7), in die in Funktion ein tragbares Aufzeichnungsmedium (103) eingelegt werden kann, und ein Ersatz-Aufzeichnungsmedium (6) enthält, wobei die integrierte Schaltung umfasst:
eine Erfassungseinheit (25), die in Funktion Spezifizierungsinformationen erfassen kann, die ein oder mehrere tragbare Aufzeichnungsmedium/Aufzeichnungsmedien spezifizieren, das/die zum Aufzeichnen eines Inhaltes verwendet soll/sollen;
eine Aufzeichnungs-Steuereinheit (23), die in Funktion Steuerung so durchführen kann dass
I in einem Fall, in dem eines der spezifizierten tragbaren Aufzeichnungsmedien in die Laufwerkeinheit eingelegt ist, wenn der Inhalt aufgezeichnet werden soll, der Inhalt auf das eingelegte tragbare Aufzeichnungsmedium aufgezeichnet wird, und
II in einem Fall, in dem keines der spezifizierten tragbaren Aufzeichnungsmedien in die Laufwerkeinheit eingelegt ist, wenn der Inhalt aufgezeichnet werden soll, der Inhalt auf das Ersatz-Aufzeichnungsmedium aufgezeichnet wird; und
eine Überspiel-Steuereinheit (23), mit der in Funktion, wenn sie durch eine Erfassung dahingehend ausgelöst wird, dass eines der spezifizierten tragbaren Aufzeichnungsmedien in die Laufwerkeinheit eingelegt wird, nachdem der Inhalt auf das Ersatz-Aufzeichnungsmedium aufgezeichnet worden ist, der aufgezeichnete Inhalt von dem Ersatz-Aufzeichnungsmedium auf das eine der spezifizierten tragbaren Aufzeichnungsmedien überspielt werden kann.

18. Computerprogramm, das von einem Computer ausgeführt werden soll, der ein Laufwerkeinheit, in die in Funktion ein tragbares Aufzeichnungsmedium entnehmbar eingelegt wird, und ein Ersatz-Aufzeichnungsmedium enthält, wobei das Computerprogramm umfasst:
Programmcode, der ausgeführt werden kann, um den Computer zu veranlassen, Spezifizierungsinformationen zu erfassen, die eines oder mehrere tragbare Aufzeichnungsmedium/Aufzeichnungsmedien spezifizieren, das/die zum Aufzeichnen eines Inhaltes verwendet werden soll/sollen;
Programmcode, der ausgeführt werden kann, um den Computer zu veranlassen,
I in einem Fall, in dem eines der spezifizierten tragbaren Aufzeichnungsmedien in die Laufwerkeinheit eingelegt ist, wenn der Inhalt aufgezeichnet werden soll, den Inhalt auf das eingelegte tragbare Aufzeichnungsmedium aufzuzeichnen, und
II in einem Fall, in dem keines der spezifizierten tragbaren Aufzeichnungsmedien in die Laufwerkeinheit eingelegt ist, wenn der Inhalt aufgezeichnet werden soll, den Inhalt auf das Ersatz-Aufzeichnungsmedium aufzuzeichnen; und
Programmcode, der ausgeführt werden kann, um den Computer zu veranlassen, bei Auslösung durch eine Erfassung dahingehend, dass eines der spezifizierten tragbaren Aufzeichnungsmedien in die Laufwerkeinheit eingelegt wird, nachdem der Inhalt auf das Ersatz-Aufzeichnungsmedium aufgezeichnet worden ist, den aufgezeichneten Inhalt von dem Ersatz-Aufzeichnungsmedium auf das eine der spezifizierten tragbaren Aufzeichnungsmedium zu überspielen.

19. Verfahren zum Aufzeichnen von Inhalt, das von einer Aufzeichnungsvorrichtung verwendet wird, die eine Laufwerkeinheit (7), in die in Funktion ein tragbares Aufzeichnungsmedium (103) herausnehmbar eingelegt werden kann, und ein Ersatz-Aufzeichnungsmedium (6) enthält, wobei das Verfahren zum Aufzeichnen von Inhalt umfasst:
Erfassen von Spezifizierungsinformationen, die ein oder mehrere tragbare Aufzeichnungsmedium/Aufzeichnungsmedien spezifizieren, das/die zum Aufzeichnen eines Inhaltes verwendet werden soll/sollen;
I in einem Fall, in dem eines der spezifizierten tragbaren Aufzeichnungsmedien in die Laufwerkeinheit eingelegt ist, wenn der Inhalt aufgezeichnet werden soll, Aufzeichnen des Inhaltes auf das eingelegte tragbare Aufzeichnungsmedium, und
II in einem Fall, in dem keines der spezifizierten tragbaren Aufzeichnungsmedien in die Laufwerkeinheit eingelegt ist, wenn der Inhalt aufgezeichnet werden soll, Aufzeichnen des Inhaltes auf das Ersatz-Aufzeichnungsmedium; und
bei Auslösung durch eine Erfassung dahingehend, dass eines der spezifizierten tragbaren Aufzeichnungsmedien in die Laufwerkeinheit eingelegt wird, nachdem der Inhalt auf das Ersatz-Aufzeichnungsmedium aufgezeichnet worden ist, Überspielen des aufgezeichneten Inhaltes von dem Ersatz-Aufzeichnungsmedium auf das eine der spezifizierten tragbaren Aufzeichnungsmedien.

20. Aufzeichnungsmedium zur Verwendung mit der Aufzeichnungsvorrichtung nach Anspruch 1, das umfasst:
ein voreingestelltes Informationselement, mit dem die Aufzeichnungsvorrichtung angewiesen wird, einen Inhalt aufzuzeichnen;
wobei das voreingestellte Informationselement enthält:
Programminformationen zu Identifizieren eines Rundfunkprogramms zum Senden des Inhaltes;
Spezifizierungsinformationen, mit denen angewiesen wird, dass der Inhalt auf das Aufzeichnungsmedium aufgezeichnet werden sollte; und
Bereichinformationen zum Spezifizieren eines vorprogrammierten Bereiches innerhalb des Aufzeichnungsmediums, in dem nur der zugelassene Inhalt aufgezeichnet werden darf.

## Revendications

1. Appareil d'enregistrement (100) comprenant :
une unité d'entraînement (7) pouvant être utilisée pour comporter un support d'enregistrement portable (103) fixé de manière détachable ;
un support d'enregistrement de secours (6) ;
**caractérisé en ce qu'**il comprend en outre
une unité d'obtention (25) utilisable pour obtenir des informations de spécification qui spécifient un ou plusieurs supports d'enregistrement portables (103) devant être utilisés pour l'enregistrement d'un contenu ;
une unité de commande d'enregistrement (23) utilisable pour réaliser une commande de sorte que (i) dans un cas dans lequel l'un des supports d'enregistrement portables spécifiés est fixé à ladite unité d'entraînement lorsque le contenu doit être enregistré, le contenu est enregistré sur le support d'enregistrement portable fixé, et (ii) dans un cas dans lequel aucun support d'enregistrement portable spécifié n'est fixé à ladite unité d'entraînement lorsque le contenu doit être enregistré, le contenu est enregistré sur ledit support d'enregistrement de secours ; et
une unité de commande de copie (23) utilisable pour, lorsque déclenchée par la détection du fait que l'un des supports d'enregistrement portables spécifiés est fixé à ladite unité d'entraînement après que le contenu ait été enregistré sur le support d'enregistrement de secours, faire un report d'enregistrement du contenu enregistré dudit support d'enregistrement de secours à l'un des supports d'enregistrement portables spécifiés.

2. Appareil d'enregistrement selon la revendication 1, dans lequel
les informations de spécification spécifient un support d'enregistrement portable, en utilisant une partie des informations d'identification qui identifient uniquement le support d'enregistrement portable ; et
ladite unité de commande d'enregistrement juge que le support d'enregistrement portable spécifié est fixé à ladite unité d'entraînement lorsqu'un support d'enregistrement portable actuellement fixé est identifié avec la partie des informations d'identification.

3. Appareil d'enregistrement selon la revendication 2, dans lequel
le support d'enregistrement portable spécifié comporte la partie des informations d'identification enregistrées sur celui-ci ; et
ladite unité de commande d'enregistrement délivre le jugement en comparant la partie des informations d'identification enregistrées sur un support d'enregistrement portable actuellement fixé à la partie des informations d'identification utilisées par les informations de spécification.

4. Appareil d'enregistrement selon la revendication 1, dans lequel
les informations de spécification spécifient le ou les supports d'enregistrement portables, en utilisant une partie des informations d'identification qui identifient un groupe composé du ou des supports d'enregistrement portables ; et
ladite unité de commande d'enregistrement juge que l'un des supports d'enregistrement portables spécifiés est fixé à ladite unité d'entraînement lorsqu'un support d'enregistrement portable actuellement fixé appartient au groupe identifié avec la partie des informations d'identification.

5. Appareil d'enregistrement selon la revendication 4, dans lequel
chacun du ou des supports d'enregistrement portables spécifiés comporte la partie des informations d'identification enregistrées sur celui-ci, la partie des informations d'identification montrant le groupe auquel chaque support d'enregistrement appartient ; et
ladite unité de commande d'enregistrement délivre le jugement en comparant la partie des informations d'identification enregistrées sur un support d'enregistrement portable actuellement fixé à la partie des informations d'identification utilisées par les informations de spécification.

6. Appareil d'enregistrement selon la revendication 4, comprenant en outre
une unité de stockage de liste qui stocke une liste montrant le ou les supports d'enregistrement portables spécifiés appartenant au groupe ;
dans lequel ladite unité de commande d'enregistrement délivre le jugement en se référant à la liste.

7. Appareil d'enregistrement selon la revendication 1, dans lequel :
ladite unité d'obtention est de plus utilisable pour obtenir des informations de temps qui indiquent un moment auquel le contenu est diffusé en tant que programme de diffusion, et
l'unité de commande d'enregistrement exécute la commande de sorte que le contenu est enregistré au moment indiqué par les informations de temps.

8. Appareil d'enregistrement selon la revendication 7, dans lequel :
l'unité d'obtention obtient les informations de spécification et les informations de temps sur la base d'une partie d'informations de pré-programmation délivrées par un utilisateur qui pré-programme l'enregistrement du contenu.

9. Appareil d'enregistrement selon la revendication 7, dans lequel :
les informations de spécification spécifient un support d'enregistrement portable ;
une partie d'informations préétablies est enregistrée sur le support d'enregistrement portable spécifié, la partie d'informations préétablies informant que le contenu doit être enregistré et contenant les informations de temps ; et
lorsque la partie d'informations préétablies est lue à partir du support d'enregistrement portable, l'unité d'obtention obtient (i) les informations de spécification destinées à informer que le contenu doit être enregistré sur le support d'enregistrement portable comportant la partie d'informations préétablies, et (ii) les informations de temps contenues dans la partie d'informations préétablies.

10. Appareil d'enregistrement selon la revendication 9, comprenant en outre
une unité de libération de zone utilisable pour, dans un cas dans lequel après que le moment indiqué par les informations de temps soit arrivé et dans lequel le contenu n'est enregistré ni sur l'un ni sur l'autre parmi ledit support d'enregistrement de secours et le support d'enregistrement portable spécifié contenant la partie d'informations préétablies enregistrées sur celui-ci, libérer une zone qui se situe à l'intérieur du support d'enregistrement portable spécifié comportant la partie d'informations préétablies et qui est réservée pour l'enregistrement du contenu.

11. Appareil d'enregistrement selon la revendication 9, comprenant en outre :
une unité de libération de zone utilisable pour, dans un cas dans lequel la partie d'informations préétablies est effacée du support d'enregistrement portable spécifié, libérer une zone qui se situe à l'intérieur du support d'enregistrement portable spécifié comportant la partie d'informations préétablies et qui est réservée pour l'enregistrement du contenu.

12. Appareil d'enregistrement selon la revendication 1, dans lequel :
le contenu est une partie de données d'images contenues dans des données de communication que reçoit l'appareil d'enregistrement depuis un dispositif externe utilisable pour communiquer avec ledit appareil d'enregistrement ;
l'unité d'obtention obtient les informations de spécification depuis les données de communication ; et
ladite unité de commande d'enregistrement exécute la commande d'enregistrement du contenu lorsque ledit appareil d'enregistrement a reçu les données de communication depuis le dispositif externe.

13. Appareil d'enregistrement selon la revendication 12, comprenant en outre
une unité de stockage de liste qui stocke une liste montrant les options des supports d'enregistrement portables parmi lesquels le ou les supports d'enregistrement portables spécifiés dans les informations de spécification peuvent être sélectionnés ; et
une unité de notification utilisable pour notifier au dispositif externe les options des supports d'enregistrement portables montrés dans la liste.

14. Appareil d'enregistrement selon la revendication 1, comprenant en outre
une unité de présentation utilisable pour présenter un avertissement à un utilisateur lorsque le contenu a été enregistré sur ledit support d'enregistrement de secours.

15. Appareil d'enregistrement selon la revendication 14, dans lequel :
l'avertissement présenté par ladite unité de présentation suggère que l'un des supports d'enregistrement portables spécifiés devrait être fixé à ladite unité d'entraînement.

16. Appareil d'enregistrement selon la revendication 14, comprenant en outre
une unité de stockage de liste qui stocke une liste montrant un ou plusieurs supports d'enregistrement portables, dans laquelle
dans un cas dans lequel au moins l'un des supports d'enregistrement portables spécifiés est montré dans la liste, ladite unité de présentation présente un avertissement qui suggère qu'au moins l'un des supports d'enregistrement portables spécifiés devrait être fixé à ladite unité d'entraînement ; et
dans un cas dans lequel aucun des supports d'enregistrement portables spécifiés n'est montré dans la liste, ladite unité de présentation présente un avertissement qui suggère que n'importe quel support d'enregistrement portable excepté pour le ou les supports d'enregistrement portables représentés dans la liste devrait être fixé à ladite unité d'entraînement.

17. Circuit intégré pour un appareil d'enregistrement (100) qui comprend une unité d'entraînement (7) pouvant être utilisée pour comporter un support d'enregistrement portable (103) fixé de manière détachable et un support d'enregistrement de secours (6), ledit circuit intégré comprenant :
une unité d'obtention (25) utilisable pour obtenir des informations de spécification qui spécifient un ou plusieurs supports d'enregistrement portables à utiliser pour enregistrer un contenu ;
une unité de commande d'enregistrement (23) utilisable pour exécuter une commande de sorte que (i) dans un cas dans lequel l'un des supports d'enregistrement portables spécifiés est fixé à l'unité d'entraînement lorsque le contenu doit être enregistré, le contenu est enregistré sur le support d'enregistrement portable fixé, et (ii) dans un cas dans lequel aucun des supports d'enregistrement portables spécifiés n'est fixé à l'unité d'entraînement lorsque le contenu doit être enregistré, le contenu est enregistré sur le support d'enregistrement de secours ; et
une unité de commande de copie (23) utilisable pour, lorsque déclenchée par la détection que l'un des supports d'enregistrement portables spécifiés est fixé à ladite unité d'entraînement après que le contenu ait été enregistré sur le support d'enregistrement de secours, faire un report d'enregistrement du contenu enregistré dudit support d'enregistrement de secours à l'un des supports d'enregistrement portables spécifiés.

18. Programme informatique devant être exécuté par un ordinateur qui comprend une unité d'entraînement pouvant être utilisée pour comporter un support d'enregistrement portable fixé de manière détachable et un support d'enregistrement de secours, ledit programme informatique comprenant :
un code de programme utilisable pour amener l'ordinateur à obtenir les informations de spécification qui spécifient un ou plusieurs supports d'enregistrement portables devant être utilisés pour enregistrer un contenu ;
un code de programme utilisable pour amener l'ordinateur à, (i) dans un cas dans lequel l'un des supports d'enregistrement portables spécifiés est fixé à l'unité d'entraînement lorsque le contenu doit être enregistré, enregistrer le contenu sur le support d'enregistrement portable fixé, et (ii) dans un cas dans lequel aucun des supports d'enregistrement portables spécifiés n'est fixé à l'unité d'entraînement lorsque le contenu doit être enregistré, enregistrer le contenu sur le support d'enregistrement de secours ; et
un code de programme utilisable pour amener l'ordinateur à, lorsque déclenché par la détection que l'un des supports d'enregistrement portables spécifiés est fixé à ladite unité d'entraînement après que le contenu ait été enregistré sur le support d'enregistrement de secours, faire un report d'enregistrement du contenu enregistré du support d'enregistrement de secours à l'un des supports d'enregistrement portables spécifiés.

19. Procédé d'enregistrement d'un contenu utilisé par un appareil d'enregistrement qui comprend une unité d'entraînement (7) pouvant être utilisée pour comporter un support d'enregistrement portable (103) fixé de manière détachable et un support d'enregistrement de secours (6), ledit procédé d'enregistrement de contenu comprenant les étapes consistant à :
obtenir des informations de spécification qui spécifient un ou plusieurs supports d'enregistrement portables devant être utilisés pour enregistrer un contenu ;
(i) dans un cas dans lequel l'un des supports d'enregistrement portables spécifiés est fixé à l'unité d'entraînement lorsque le contenu doit être enregistré, enregistrer le contenu sur le support d'enregistrement portable fixé, et (ii) dans un cas dans lequel aucun des supports d'enregistrement portables spécifiés n'est fixé à l'unité d'entraînement lorsque le contenu doit être enregistré, enregistrer le contenu sur le support d'enregistrement de secours ; et
lorsque déclenché par la détection que l'un des supports d'enregistrement portables spécifiés est fixé à ladite unité d'entraînement après que le contenu ait été enregistré sur le support d'enregistrement de secours, faire un report d'enregistrement du contenu enregistré du support d'enregistrement de secours à l'un des supports d'enregistrement portables spécifiés.

20. Support d'enregistrement pour utilisation avec l'appareil d'enregistrement selon la revendication 1, comprenant :
une partie d'informations préétablies pour ordonner audit appareil d'enregistrement d'enregistrer un contenu ;
dans lequel ladite partie d'informations préétablies comprend :
des informations de programme destinées à identifier un programme de diffusion destiné à diffuser le contenu ;
des informations de spécification destinées à informer que le contenu devrait être enregistré sur ledit support d'enregistrement ; et
des informations de zone destinées à spécifier une zone de pré-programmation à l'intérieur dudit support d'enregistrement où seul le contenu peut être enregistré.
